# EUROPEAN PATENT SPECIFICATION

(11) **EP 4 209 025 B1**
(45) Date of publication and mention of the grant of the patent: **26.02.2025**
(21) Application number: 21806445.9
(22) Date of filing: 28.09.2021
(51) Int. Cl.: H04W 12/00, H04W 12/037, H04W 12/0471, H04W 12/106, H04W 12/069, H04W 48/08

(54) **METHOD AND APPARATUS FOR CRITICAL CONTROL MESSAGE TRANSFER ACROSS NETWORKS**
VERFAHREN UND VORRICHTUNG ZUR ÜBERTRAGUNG KRITISCHER STEUERNACHRICHTEN ÜBER NETZWERKE
PROCÉDÉ ET DISPOSITIF DE TRANSFERT DE MESSAGE DE COMMANDE CRITIQUE ENTRE DES RÉSEAUX

(30) Priority: 29.09.2020 US 202063084793 P
(43) Date of publication of application: 12.07.2023
(73) Proprietor: Huawei Technologies Co., Ltd., Shenzhen, Guangdong 518129 (CN)
(72) Inventor: XIANG, Zhixian, Frisco, Texas 75035 (US); WONG, Marcus, Green Brook, New Jersey 08812 (US)
(74) Representative: Thun, Clemens
(86) International application number: PCT/US2021/052468
(87) International publication number: WO 2021/243343

(56) References cited:
- WO-A1-2019/017689
- CT1: "Reply LS on Control Plane Solution for Steering of Roaming in 5GS", vol. TSG CT, no. Sorrento, Italy; 20181210 - 20181211, 9 December 2018 (2018-12-09), XP051548130, Retrieved from the Internet <URL:http://www.3gpp.org/ftp/Meetings%5F3GPP%5FSYNC/CT/Docs/CP%2D183211%2Ezip> [retrieved on 20181209]
- "3rd Generation Partnership Project; Technical Specification Group Core Network and Terminals; Non-Access-Stratum (NAS) protocol for 5G System (5GS); Stage 3; (Release 17)", vol. CT WG1, no. V17.0.0, 25 September 2020 (2020-09-25), pages 1 - 729, XP051960989, Retrieved from the Internet <URL:ftp://ftp.3gpp.org/Specs/archive/24_series/24.501/24501-h00.zip 24501-h00.doc> [retrieved on 20200925]
- "3rd Generation Partnership Project; Technical Specification Group Core Network and Terminals; Secured packet structure for (Universal) Subscriber Identity Module (U)SIM Toolkit applications (Release 15)", vol. CT WG6, no. V15.1.0, 7 July 2020 (2020-07-07), pages 1 - 19, XP051924210, Retrieved from the Internet <URL:ftp://ftp.3gpp.org/Specs/archive/31_series/31.115/31115-f10.zip 31115-f10.docx> [retrieved on 20200707]

## Description

### TECHNICAL FIELD

The present disclosure relates generally to wireless communications, and in particular embodiments, to techniques and mechanisms for critical control message transfer across networks.

### BACKGROUND

When a UE is out of coverage of a home network of the UE, the UE may use a visited network for communication. The visited network may have a business relationship (e.g., a roaming agreement) with the home network and can provide local connectivity for the UE. The visited network can be either public or private. The home network can be either a public network or a private network.

The home network may guide the UE to select a visited network when the UE is out of the coverage of the home network. For example, the home network may provide a preferred network list preconfigured for the UE, such as a preferred roaming list of public networks, or a preferred network list of private networks. The UE can use the preferred network list to select a visited network (e.g., one that is more reputable or less expensive in terms of roaming charges) that is preferred by the home network, before the UE registers or connects to the selected visited network.

As another example, the home network may provide a steering instruction to steer the UE to a more preferred network, while UE is registering or has connected to a visited network.

In either of the examples, when critical information is to be communicated between the home network and the UE that is out of the coverage of the home network, it is desirable to secure communication of the critical information. Additionally, it is also desirable to hide such critical information from the visited network and to prevent the visited network from blocking the communication between the UE and its home network since the visited network may be the network that the UE's home network is requesting the UE to steer away from.

In this context, WO 2019/017689 A1 refers to a system for managing anti-steering of roaming in a wireless communication network. The system includes a HPLMN, a VPLMN and a UE. The HPLMN obtains a register request message from the VPLMN and derives at least one HPLMN specific security key based on at least one security parameter. Further, the HPLMN protects a preferred PLMN list using the at least one HPLMN specific security key and the security parameter and sends the protected preferred PLMN list to the VPLMN along with necessary security information. Further, the VPLMN is configured to receive the protected preferred PLMN list from the HPLMN and send a message including the protected preferred PLMN list to the UE. The message mandates the VPLMN to send the preferred PLMN list transparently to the UE. Further, the UE is configured to receive the message including the preferred PLMN list from the VPLMN.

### SUMMARY OF THE INVENTION

Technical advantages are generally achieved, by embodiments of this disclosure which describe a method and apparatus for critical control message transfer across networks. Further, that problem is solved by the subject matter of the independent claims. Further implementation forms are provided in the dependent claims.

According to one aspect of the present disclosure, a method is provided that includes: receiving, by a communication device via a first visited network of the communication device, a message from a first home network of the communication device, the message comprising a first network information container and a credential indicator, the first network information container comprising information that is integrity protected and/or cipher protected, and the credential indicator indicating a type of a credential used for protecting the first network information container; verifying, by the communication device, the first network information container using one or more security parameters based on the type of credential; and obtaining, by the communication device when the first network information container is successfully verified, the information comprised in the first network information container.

Optionally, in any of the preceding aspects, the type of protection mechanism comprises integrity only protection, cipher only protection, or integrity and cipher protection.

Optionally, in any of the preceding aspects, verifying the first network information container comprises: verifying, by the communication device, integrity of the first network information container using the one or more security parameters; and/or decrypting, by the communication device, the first network information container using the one or more security parameters.

Optionally, in any of the preceding aspects, the one or more security parameters comprise one or more of following: a security parameter for verifying the first network information container, or accessing a network, the security parameter including a certificate, a public key or a privacy key, a key identifier, a synchronization or freshness quantity, a nonce, or a network security preference.

Optionally, in any of the preceding aspects, the method further comprises: executing, by the communication device, an instruction comprised in the first network information container when the first network information container is successfully verified.

Optionally, in any of the preceding aspects, the instruction: instructs the communication device to connect to a second visited network; or instruct the communication device to conduct network selection to select a new visited network based on a list of candidate network provided by the first home network.

Optionally, in any of the preceding aspects, the method further comprises: accessing, by the communication device, the second visited network or the new visited network using the type of the credential indicated by the credential indicator and/or information in the first network information container.

Optionally, in any of the preceding aspects, the second visited network is a preferred network configured by the first home network for the communication device.

Optionally, in any of the preceding aspects, the method further comprises: sending, by the communication device, a second network information container to the first home network via the first visited network, the second network information container comprising information that is integrity protected and/or cipher protected.

Optionally, in any of the preceding aspects, the method further comprises: discarding, by the communication device, the first network information container when the first network information container is not successfully verified.

According to the invention, the type of the credential comprises a 3GPP credential or a non-3GPP credential.

Optionally, in any of the preceding aspects, the first network information container comprises least one of following: a network steering instruction; a network steering policy; a list of preferred visited networks for the communication device; a quality of service (QoS) requirement for a service or a visited network; configuration and/or capability information for the communication device; or a security parameter.

Optionally, in any of the preceding aspects, the message further comprises the one or more security parameters.

Optionally, in any of the preceding aspects, the message further comprises operator information of the first home network.

Optionally, in any of the preceding aspects, the message is a Non-Access Stratum (NAS) message.

Optionally, in any of the preceding aspects, the communication device has or does not have a universal integrated circuit card (UICC).

Optionally, in any of the preceding aspects, the method further comprises: receiving, by the communication device, a third network information container, corresponding to a second home network of the communication device, and the first network information container corresponding to the first home network of the communication device.

Optionally, in any of the preceding aspects, one of the first home network and the second home network is a private network.

Optionally, in any of the preceding aspects, the first network information container comprises information for accessing a public network and information for accessing a private network.

Optionally, in any of the preceding aspects, the first home network is a public network or a private network.

Optionally, in any of the preceding aspects, the first visited network is a public network or a private network.

Optionally, in any of the preceding aspects, the message further comprises information of usage restriction according to which the first network information container is used. Optionally, in any of the preceding aspects, the method further comprises: performing, by the communication device, authentication and authorization with the first home network via the first visited network before receiving the message.

According to another aspect of the present disclosure, a method is provided that includes: determining, by a network device of a first network, to send first information to a communication device, the first network being a home network of the communication device, and the communication device being served by a first visited network; generating, by the network device, a network information container comprising the first information, the network information container being integrity protected and/or cipher protected; determining, by the network device, a type of credential used to protect the network information container; and sending, by the network device, a message to the communication device via the first visited network, the message comprising the network information container and a credential indicator indicating the type of credential.

Optionally, in any of the preceding aspects, the network information container comprises at least one of following: a network steering instruction; a network steering policy; a list of preferred visited networks for the communication device; a quality of service (QoS) requirement for a service or a visited network; configuration and/or capability information for the communication device; or a security parameter.

Optionally, in any of the preceding aspects, the network steering instruction: instructs the communication device to connect to a second visited network; or instruct the communication device to conduct network selection to select a new visited network based on a list of candidate network provided by the home network.

Optionally, in any of the preceding aspects, the message further comprises one or more security parameters used for verifying the network information container.

Optionally, in any of the preceding aspects, the one or more security parameters comprise one or more of following: a security parameter for verifying the network information container, or accessing a network, the security parameter including a certificate, a public key or a privacy key, a key identifier, a synchronization or freshness quantity, a nonce, or a network security preference.

Optionally, in any of the preceding aspects, the message further comprises operator information of the home network.

Optionally, in any of the preceding aspects, the message is a Non-Access Stratum (NAS) message.

Optionally, in any of the preceding aspects, the communication device has or does not have a universal integrated circuit card (UICC).

Optionally, in any of the preceding aspects, the network information container comprises information for accessing a public network and information for accessing a private network.

Optionally, in any of the preceding aspects, the home network is a public network or a private network.

Optionally, in any of the preceding aspects, the first visited network is a public network or a private network.

Optionally, in any of the preceding aspects, the message further comprises information of usage restriction of the network information container.

Optionally, in any of the preceding aspects, the method further comprises: receiving, by the network device from the communication device via the first visited network, an information container comprising information that is integrity protected and/or cipher protected.

Optionally, in any of the preceding aspects, the message further comprises information indicating a type of protection mechanism applied to protect the network information container.

Optionally, in any of the preceding aspects, the type of protection mechanism comprises integrity only protection, cipher only protection, or integrity and cipher protection.

According to the invention, the type of credential comprises a 3GPP credential or a non-3GPP credential.

According to another aspect of the present disclosure, an apparatus is provided that includes: a non-transitory memory storage comprising instructions; and one or more processors in communication with the memory storage, wherein the instructions, when executed by the one or more processors, cause the apparatus to perform any one of the preceding aspects.

According to another aspect of the present disclosure, a non-transitory computer-readable media is provided that stores computer instructions, which when executed by one or more processors of an apparatus of a first network, cause the apparatus to perform any one of the preceding aspects.

According to another aspect of the present disclosure, a system is provided that includes a network device of a first network and a communication device, the first network being a home network of the communication device, and the communication device being served by a visited network. The network device is configured to perform: determining to send first information to the communication device; generating a network information container comprising the first information, the network information container being integrity protected and/or cipher protected; determining a type of credential used for protecting the network information container; and sending a message to the communication device via the visited network, the message comprising the network information container and a credential indicator indicating the type of credential. The communication device is configured to perform: receiving, via the visited network, the message from the home network of the communication device; verifying the network information container using one or more security parameters based on the type of credential; and obtaining, when the network information container is successfully verified, the first information comprised in the network information container.

The above aspects of the present disclosure provide improved security for communicating information between a UE and its home network when the UE is out of coverage of the home network, and allows the UE to know what type of credential is used to protect the communicated information, based thereon the UE is able to verify the communicated information.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates a diagram of an example scenario where a UE is out of its home network;
Figure 2 illustrates a diagram of a communication network, highlighting transmission of a SoR container and 3GPP credentials according to an existing technique;
Figure 3 shows the table 8.2.8.1.1 specified in 3GPP TS 24.501;
Figure 4 illustrates a diagram of an embodiment NAS message, highlighting communication of a private network information container;
Figure 5 is a diagram illustrating embodiment operations between a UE, a home network of the UE and a visited network of the UE;
Figure 6 is a diagram illustrating embodiment operations between a UE, two home networks of the UE and a visited network of the UE;
Figure 7 is a diagram of an embodiment method for private network information container key and policy provisioning;
Figure 8 is a flowchart illustrating an embodiment method for wireless communications;
Figure 9 is a flowchart illustrating another embodiment method for wireless communications;
Figure 10 is a flowchart illustrating another embodiment method for wireless communications;
Figure 11 is a diagram illustrating an embodiment communication system;
Figure 12A illustrates an example end device (ED);
Figure 12B illustrates an example base station; and
Figure 13 is a block diagram of an embodiment computing system that may be used for implementing the devices and methods disclosed herein.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. Further, it should be understood that various changes, substitutions and alterations can be made herein without departing from the scope of this disclosure as defined by the appended claims.

The following lists some abbreviations used in the disclosure for ease of description:
- N3IWF: Non-3GPP interworking Function
- SNPN: Stand-alone Non-Public-Network
- UPF: User Plane Function
- DN: Data Network
- PLMN: Public-Line-Mobile Network
- SP: Service Provider
- UDM: Unified Data Management
- NWDAF: NetWork Data Analytic Function
- UICC: Universal Integrated Circuit Card. It is a new generation SIM (Subscriber Identification Module) included in cell phones or laptops used in some high speed wireless 3G networks.
- SLA: Service License Agreement

### NAS: Non-Access Stratum

A user equipment (UE) out of coverage of a home network of the UE may communicate with the home network via a visited network of the UE. Conventionally, when information to be communicated between the home network (which is a public network) and the UE via the visited network, the information may be protected using third generation partnership project (3GPP) credentials and protection mechanisms, and transmitted. However, this scheme is not applicable to home networks that do not use or support the 3GPP credentials and protection mechanisms. An example of a home network that does not use or support 3GPP credentials may include a private 3GPP network that is built for private, non-public use or for specific users.

Embodiments of the present disclosure provide methods for communication between a UE and a home network of the UE when the UE is out of coverage of the home network. The embodiments support communication of information that is integrity protected and/or cipher protected between the home network and the UE via a visited network, and allows the UE to know whether a 3GPP credential and/or protection mechanism or a non-3GPP credential and/or protection mechanism is to be used so that the UE is able to select the corresponding protection mechanism and key to securely communicate information between the UE and the home network, and access visited networks as well. The embodiments improve security of the communication when the UE is out of the coverage of the home network, and are applicable to public networks and private networks.

In some embodiments, a network device of a network may generate a network information container including information to be sent to a communication device out of coverage of the network. The network is a home network of the communication device, and the communication device is being served by a visited network. The network information container may be integrity protected and/or cipher protected. The network device may send, to the communication device via the visited network, a message including the network information container and a credential indicator indicating a type of credential used to protect the network information container. The type of credential is a 3GPP or non-3GPP credential. The communication device may verify the network information container using one or more security parameters based on the type of credential, and obtain the information in the network information container when the verification succeeds, or discard the network information container when the verification fails. Further details are provided in the following.

When a UE is out of coverage of a home network of the UE, the UE may use a visited network for communication. A home network of a UE may be a network that the UE has a subscription with, e.g., a network that a user has subscribed for communication services. The visited network may have a business relationship (e.g., a roaming agreement) with the home network and can provide local connectivity for the UE. The visited network can be a public or private network. The home network can be either a public or private network. (Note: Roaming is a specific term for public networks which include some regulatory requirements. The term of "roaming" is generally not used for private networks now.)

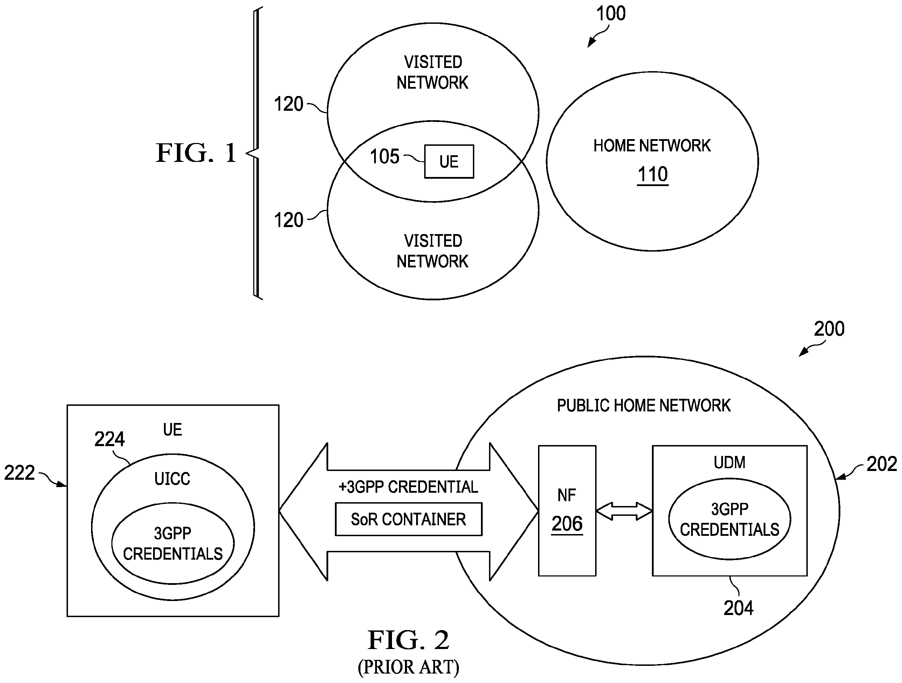

Figure 1 illustrates a diagram of an example scenario 100 where a UE is out of coverage of its home network. As shown, a UE 105 is out of the coverage of its home network 110, and within the coverage of visited networks 120, 130. In Figure 1, each oval represents coverage of a corresponding network. The UE may select the visited network 120 or 130 through which wireless communications of the UE is performed. The home network 110 may guide the UE 105 to select a visited network when the UE is out of the coverage of the home network no.

There are generally two ways for the home network 110 to guide the UE 105's selection. In one way, the home network 110 may provide a preferred network list preconfigured for the UE, such as a preferred roaming list of public networks, or a preferred network list of private networks. The UE 105 can use the preferred network list to select a visited network (e.g., one that is more reputable or less expensive in terms of roaming charges), which is preferred by the home network 110, before the UE registers or connects to the selected visited network. For example, when the UE 105 is out of the coverage of the home network 110, the UE 105 may select the visited network 130 based on a preferred network list provided by the home network 110.

In another way, the home network 110 may provide a steering instruction to steer the UE 105 to a more preferred network, while UE is registering or has connected to a visited network. For example, the UE 105 connects to the visited network 120 when the UE is out of the coverage of the home network 110. The UE 105 may receive a steering instruction from the home network 110 instructing the UE 105 to connect to the visited network 130, which may be preferred by the home network.

Using a preferred network benefits both a UE and a home network of the UE (e.g., lower roaming charges). Solutions have been presented to allow a service provider of the UE, who owns the subscription of the UE, to steer its UE to a more preferred network when the UE has registered with or connected to a less preferred network.

3GPP has introduced a mechanism to allow a public home network, which uses 3GPP defined credentials and security mechanisms, to steer its UE to a preferred public visited network, called "Steering of roaming" (SoR), in which the public home network sends a steering instruction via a SoR container to the UE using the control plane of the public visited network. The SoR mechanism may not be suitable for a private home network when the private home network does not use the 3GPP credential and security mechanisms. A private network may be a network built for private or non-public users or for specific users. For example, an enterprise network is a private network accessible only by users of an enterprise and not the general public. Private networks built using the 5G specifications may use the same protocols, same procedures, and same messaging mechanisms as defined in 3GPP specifications, with the exception that such private networks may use non-3GPP credentials (e.g., certificates, public/private keys, etc.) for authentication. 3GPP is examining solutions to allow a service provider of a private home network to steer its UE to another visited network, when the UE has registered or connected to a visited network. There are new 3GPP Release 17 study items on network enhancements for private networks (FS_NPN) in 3GPP SA2 (architecture WG) and SA3 (Security WG). A U.S. provisional application No. 63/021460, entitled "Method and Apparatus for Network Initiated Continuity of SNPN Deployments," filed on May 7, 2020 introduces a private network steering mechanism where the private network sends a special steering instruction to a UE.

A home network of a UE can provide both a preferred network list and one or more steering instructions to the UE in order to guide/steer the UE to a visited network that is more desired by the home network. The two pieces of information, i.e., the preferred network list and the one or more steering instructions, may be used by the UE in different phases of a connection. For example, the preferred network list may be used in a network selection phase of the UE, and the one or more steering instructions may be used when the UE is in a connected state. Thus, there are different security concerns for communicating the information, as described in the following:
A network may not be able to provide a preferred network list to a UE in all cases, e.g., when the network cannot anticipate where the UE will visit.
When the UE is outside of the home network coverage, the UE needs to connect to a visited network. The underlying assumption is that the visited network (even if the visited network is not preferred by the home network operator due to, for example, high roaming charges) is well-behaved (e.g., carrying signaling traffic all the way to the UE's home network without modifying its content, not purposefully dropping signaling traffic even if the intent of the signaling is to redirect the UE to another network, etc.). Under this assumption, the home network should not have any concern that a currently connect visited network of the UE will modify information sent from the home network to the UE, e.g., a preferred network list, before forwarding the preferred network list to the UE. However, a more prudent action to take by the home network may be to provide security protection to the preferred network list when the preferred network list is to be sent to the UE via the currently connect visited network. This will help secure the communication of the preferred network list, especially when the UE is accessing a visited network that is not on the preferred network list or when the visited network is not well-behaved.
The home network may not be able to provide an appropriate preferred network list to the UE in all cases while the UE is accessing the home network as discussed above. Therefore, there is a need to provide such a network preferred list in real time when the UE is accessing a visited network, e.g., for the very first time. The home network may need to send the list to the UE via a visited network.
If the UE is already connected to a visited network, and the preferred network list from the home network will not trigger UE to leave the currently connected visited network to another network, the home network may not have any concern about the currently connected visited network modifying the preferred network list before forwarding the preferred network list to the UE.
The steering information (steering instruction) is used to steer the UE from the currently connected visited network to a new visited network. The steering information is one example of a control message. However, even if the currently connected visited network is well-behaved, there may still be a risk that the currently connected visited network may modify the steering instruction in order to keep the UE in its network. Therefore, the steering instruction from the home network and any other information that the home network is attempting to send to the UE need to have security protection (e.g., integrity protection and/or ciphering protection) in order to prevent this control message and other information from being modified.

In consideration of various situations and concerns described above, it is desirable that critical control information, such as steering information or a preferred list of visited network determined by a home network of a UE, sent from the home network of the UE and forwarded by a visited network (e.g., a private network) to the UE, is protected end-to-end (E2E). Similarly, E2E protection of critical control information sent from the UE to the home network via the visited network is also desirable. It can not be guaranteed that the visited network (e.g., one that is not well-behaved or one that other users may have previously provided negative comments or rating) delivers the control information without potentially mis-using or manipulating the control information.

Current 3GPP standards define a dedicated container (e.g., a SoR container) to carry public network SoR instructions with integrity protection, such as with a key derived from the 3GPP credentials. 3GPP credentials may include long-term keys and subscription identifiers used to uniquely identify UE subscriptions, which may used to mutually authenticate the UE and the 3GPP core network. 3GPP credentials may also be used in deriving other security parameters. These 3GPP credentials may be shared between a UE (e.g., stored in the UE's UICC if any, such as a SIM card) and a home network (e.g., stored in UDM) of the UE. Therefore, the SoR container is closely tied to the 3GPP credentials and the UICC in the UE.

Currently, the SoR container is integrity protected. Integrity protection and related algorithms are specified in 3GPP TS 33.501, version 15.4.0, Release 15 (2019-05). As an example, a key (e.g., K_{ausf}) may be generated base on a primary authentication procedure between a UE and a public home network. The key is then used by the home network to integrity protect the SoR container, e.g., by calculating a message authentication code (1^{st} code) of the SoR container using an integrity algorithm. The message authentication code may be appended to the SoR container and sent. The UE may use the same key to verify whether the SoR container has been modified during transmission. As an example, the UE may compute a message authentication code (2^{nd} code) based on the received SoR container, and verify the integrity of SoR container by comparing the 2^{nd} code with the received 1st code. As the SoR container is only integrity-protected, it may still be visible to those that can receive the SoR container. However, any modification to the SoR container may be detectable. The integrity code (or the message authentication code) that is calculated when the SoR container is modified will not be the same as the code from the sender of the SoR container.

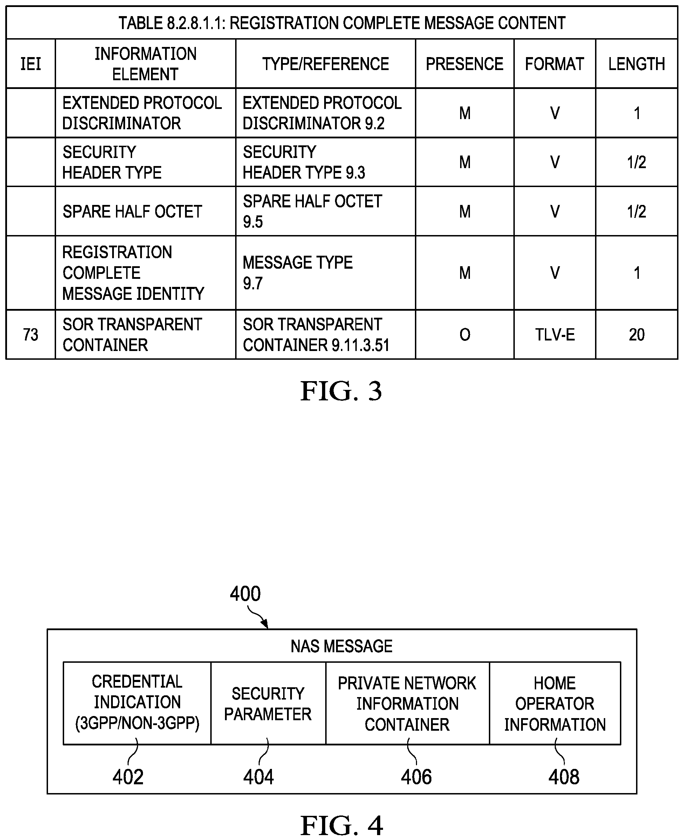

Figure 2 illustrates a diagram of a communication network 200, highlighting transmission of a SoR container and 3GPP credentials according to an existing technique. The network 200 includes a public home network 202 of a UE 222. The UE 222 includes a UICC 224. The public home network 202 includes a UDM 204 storing 3GPP credentials. The public home network 202 may transmit, to the UE 222, a SoR container including a SoR instruction, together with the 3GPP credentials stored in the UDM 204, via a network function (NF) 306. The UE 222 may store the received 3GPP credentials in the UICC 224. The UE may derive a key based on the saved 3GPP credentials and verify the received SoR container. Figure 3 shows the table 8.2.8.1.1 specified in 3GPP TS 24.501, version 16.5.1, Release 16 (2020-08), "5G; Non-Access-Stratum (NAS) protocol for 5G System (5GS); Stage 3". Figure 3 shows a SOR transparent container in the table 8.2.8.1.1.

However, for some standalone private networks, non-3GPP credentials are used for authentication and access to the standalone private networks. These private networks may use non-3GPP credentials and protection mechanisms, different than the 3GPP credentials and protection mechanisms. For example, a private network may use a public/private key scheme to protect information (container) transmitted. A UE may use a public key of a home network to protect a container and only the home network with a private key can recover or verify the container. Non-3GPP credentials can take on several forms, such as deriving a key based on a non-3GPP credential and using the key to integrity/privacy protect a container, using a private key (of a non-3GPP credential) directly to integrity/privacy protect the container by the network while the UE uses the public key of the network to validate the container, and so on. Thus, the current SoR mechanism is not suitable for private networks that do not use or support 3GPP credentials for authentication and subsequent protection of containers. Further, a UE may not have a UICC storing 3GPP or non-3GPP credentials. Thus, the existing technique described above, e.g., in Figure 2, may not be suitable for use. Moreover, when a UE has subscriptions to both a public network and a private network (i.e., the UE has two home networks), these two networks may use different security or key mechanisms. There needs to be coordination between the UE and the home networks to select the right mechanism and right key to securely convey a steering instruction and other information between the UE and the home networks.

Therefore, methods and apparatus are needed for a service provider of a home network using non-3GPP credentials to provide control information, such as the steering instructions, to its UE via a visited network. Embodiments of the present disclosure provide a mechanism for communicating information between a UE and a home network of the UE via a visited network of the UE. The embodiments improve security of the communication, and allow to hide the information from the visited network and to prevent the visited network from blocking the communication between the UE and its home network (as the visited network may be the network that the UE's home network is requesting the UE to steer away from). The embodiments are applicable to public networks and private networks.

In some embodiments, a new private network information container (or referred to as a network information container) may be established to convey information, such as a mobility instruction, that needs security protection, between a home network of a UE and the UE, via a visited network of the UE (i.e., the UE is out of coverage of the home network). The term "private network information container" used herein in the present disclosure is merely for differing from the conventional SoR container, and should not be limited to situations where only private networks are involved. The private network information container is a dedicated private network information container used to exchange critical information between the UE and its home private network, both of which may not implement the credentials and security mechanisms defined by 3GPP. The private network information container may be transmitted in a NAS message, or any other applicable message. The contents of the private network information container may be protected with security parameters derived from non-3GPP credentials (e.g., certificate, public or private key, etc.) according to a protection mechanism. The security parameters may be established, determined, or derived through a primary authentication procedure (as per specification of 3GPP TS 33.501, version 15.4.0, Release 15 (2019-05), every UE accessing a public network or a private network needs to undergo the primary authentication procedure), or dedicated key creation procedures after an authentication procedure. A dedicate key creation procedure may be performed, e.g., when a key used previously has expired. In this case, keys may be refreshed without running another primary authentication procedure. The authentication procedure may be the primary authentication or a secondary authentication following a primary authentication, for example, according to 3GPP TS 33.501. An embodiment mechanism may be established to allow the UE and the home network to exchange an indication to indicate which security mechanism and container will be allowed (conventionally there is a container already defined for communicating a preferred public network list) for the home network to convey the mobility instructions, when the UE is able to support multiple security mechanisms or has different subscriptions. The embodiments do not have impact on UEs that do not support the embodiment mechanism. In the following description, the term of "private network information container" and "container" are used interchangeably. Figure 4 illustrates an embodiment NAS message 400, highlighting communication of a private network information container according to an embodiment of the present disclosure. The NAS message 400 may be communicated between a UE and a home network of the UE, via a visited network of the UE out of coverage of the home network. The NAS message 400 may be sent by the UE or by the home network. The NAS message 400 may be any existing or future NAS message that is configurable to carry a network information container. Examples of the NAS message 400 may include update or attach messages, authentication messages, service requests, and so on. As shown, the NAS message 400 includes a credential indication 402, a security parameter 404 (including one or more parameters), a private network information container 406 and home operator information 408.

The credential indication 402 indicates a type of credential to be used with the private network information container 406, e.g., a 3GPP credential, or a non-3GPP credential. For example, the credential indication 402 may indicate whether a key used to integrity protect the private network information container 406 is based on a 3GPP credential or based on a non-3GPP credential. The key may be obtained through the authentication procedure between a UE and its home network, or may be derived based on a credential of the home network. Thus, the credential indication 402 indicates a type of credential used to protect the container. As another example, the credential indication 402 may indicate which type of credential (e.g., 3GPP or non-3GPP) is to be used by a UE to access a visited network, e.g., authenticating the visited network. The credential indication 402 may further indicate a type of protection (e.g., a security mechanism) applied to the private network information container 406. As an example, the type of protection may be 3GPP or non-3GPP integrity only, 3GPP or non-3GPP cipher only, or 3GPP or non-3GPP integrity and cipher. The cipher protection herein is also referred to as privacy protection, where information is encrypted based on an encryption algorithm agreed by both sender and receiver using one or more security parameters, e.g., a cipher key, by a sender, and a receiver of the information may decrypt the cipher protected information using one or more security parameters, e.g., a cipher key. The cipher key may be a public key or a private key. Generally, security parameters used for ciphering/encryption of information/message may include, as an example, a key and a synchronization quantity, and may also include other parameters such as a cell ID, a frequency a cell is using, and/or a transmission direction of the message (i.e., uplink or downlink), and so on. The type of protection may be indicated together with the credential indication 402 or separately from the credential indication 402. According to the invention, the credential indication 402 is a flag indicating what type of credential is to be used. If the flag is set to (or indicates) 3GPP (e.g., using one bit "o"), it means that a 3GPP credential is used for the private network information container 406. If the flag is set to non-3GPP (e.g., using one bit "1"), it means that a non-3GPP credential is used for the private network information container 406. According to the invention, the credential indication 402 is one bit indicating whether a 3GPP or non-3GPP credential is used, and , as an example, the NAS message 400 includes a protection indicator, which may be two bits, to indicate the type of protection applied to the container. Those or ordinary skill in the art would recognize many variations, modification and embodiments for indicating the type of protection.

The security parameter 404 is used to verify the private network information container 406. The private network information container 406 is integrity protected and/or cipher protected. A UE receiving the private network information container 406 verifies (validate or authenticate) the integrity and privacy of the private network information container 406 using the security parameter 404 (which may also be based on the type of protection indicated). The security parameter 404 may include one or more of following information:
one or more parameters, such as a certificate, a public key, and/or a private key, etc., which may be used for verifying the private network information container 406, or for accessing/connecting a visited network (e.g., authenticating the visited network);
a key identifier. For example, the key identifier may identify a key or a key-pair (e.g., public/private key pair) to be used, e.g., for verifying the container 406 (e.g., calculating a message) or for accessing/connecting a visited network;
a synchronization or freshness quantity (e.g. a counter or sequence number that is monotonically incremented, a counter for cryptographic synchronization). A synchronization or freshness quantity helps ensure that protection of the container cannot be replayed in the future;
an indicator indicating which protection algorithm (which integrity protection algorithm or which cipher protection algorithm) is to be used;
a nonce. A nonce is similar to the synchronization or freshness quantity but can be generated randomly. One purpose of providing a nonce is to prevent replay of protected information; or
a network security preference (e.g., network security policy related information). For example, this may include a security preference/policy of a network to be accessed.

The credential indication 402 and the security parameter 404 may be provided by a sender of the private network information container 406, such as a UE or a home network of a UE.

The private network information container 406 in the embodiments may be used to convey information between a UE and a home network of the UE, which requires E2E integrity and/or privacy protection. Information contained in the private network information container 406 may be used by a UE to select, connect and/or access a visited network, or may be used by the home network of the UE to configure one or more visited networks, e.g., preferred visited networks, for the UE. The private network information container 406 may include one or more of following information:
a network steering instruction. This may be transmitted from a home network to a UE.
a network steering policy. This may be transmitted from a home network to a UE. An example of the network steering policy may include an order of preferences of multiple visited networks that are available for a UE to steer to, a network geographic location limitation, and so on. The preferences may be determined based on a security protection requirement. For example, a first preference may be that both cipher and integrity protections are required, a second preference may be that the cipher protection is required, and a third preference may be that the integrity protection is required. As an example, if a visited network requires cipher protection while the UE does not support, the UE may not select the visited network.
a list of preferred visited networks for a UE. This may be transmitted from a home network to the UE. A home network of the UE may determine/configure the list of preferred visited networks for the UE to select one to steer to.
a quality of service (QoS) requirement for a service (e.g., a current service) of a UE or a visited network (a target visited network) of a UE. This may be transmitted from a UE to a home network of the UE. The QoS may be a requirement that is required by a service provided to the UE, or that must be met by a visited network. As an example, when a UE determines that a currently visited network does not meet the QoS, the UE may determine to connect to another visited network, even if the currently visited network may have satisfied other network steering policy. Which visited network that the UE is to select and connect to may be a decision made based on one or more factors, such as: a steering policy (such as the network steering policy), a security policy (e.g., a security protection type, required by the home network or supported by the UE), a QoS requirement (e.g., of the UE and/or a service), UE capability (e.g., whether the UE supports a type of protection, or a RF capability), and so on. Based on these requirements, the UE can be configured to select a network that is most suitably preferred by the home network. It is possible that none of the available visited networks meets all of the requirements of the UE and the home network.
configuration and capability information for a UE. The configuration information of the UE may include a radio frequency (RF) related parameter, such as a frequency band supported by the network or the UE. A UE's configuration information should not be visible or modified by any other entities other than its home network. The capability information of the UE may include UE security capabilities, e.g., a capability of supporting a type of protection or a protection algorithm. UE capabilities may sometimes be resent back to the UE by the home network, informing the UE that the UE capability information has been received by the home network and is not modified by anyone trying to listen to the communications between the UE and the home network.
security parameter(s) for integrity protection and/or cipher protection of the private network information container 406. This may include the security parameter 404, or a message authentication code (or validation code, that is calculated based on the content of the container, a synchronization quantity, and/or other information).

The private network information container 406 may be used to convey information, e.g., mobility information or non-mobility information, between a home network of a UE and the UE, where the information needs E2E integrity and/or privacy protection. The UE may verify the private network information container 406 using a key (e.g., generated during a primary authentication procedure with the home network) that is sent by the home network or that is derived by the UE based on the type of credential indicated by the credential indication 402, and possibly using other information, such as information carried in the security parameter 404, depending on what protection mechanism is used.

An advantage of using the NAS messages to carry the private network information container 406 is that a UE would not incur any roaming charges before a user plane session has been established. UEs are generally charged for the amount of user plane data transferred over a user plane protocol data unit (PDU) session, but not incurring any charges for control plane data or signaling.

The home operator information 408 may include information about an operator (or service provider) of a home network of a UE, e.g., an identifier of the operator. Based on the home operator information 408, a UE determines a correspondence between the private network information container 406 and the home network of the UE.

In one embodiment, a private network information container may include both a protected part and an unprotected part. The protected part may include the information described above, and the unprotected part may include security parameters, such as the security parameter 404. Thus, in this embodiment, the private network information container may also include the security parameters. When the entire container is only integrity-protected, everything inside the container is clear text. Placing the security parameters inside the container has the advantage that the security parameters are additionally integrity protected comparing to having the security parameters outside the container.

The private network information container may be communicated in the control plane between the UE and the home network, as well as the control plane between the home network and the visited network. For example, the private network information container may be carried in a NAS message between the UE and the visited network after the home network provides the private network information container to the visited network via a control plane interface between these two networks.

In some embodiments, the private network information container may be protected (can be either integrity or privacy protection or both) based on a non-3GPP credential, after a UE is authenticated and authorized by a home network of the UE. That is, the home network supports non-3GPP credentials. The conventional mechanism for public home networks assumes that a currently visited network of a UE is trustable and a network information container is only integrity-protected by a home network. The currently visited network may be able to examine or even modify the contents of the container, such as steering instructions that instruct the UE to go to another network, and the currently visited network still delivers the container to the UE. The UE may determine that the contents of the container is examined or modified by the current visited network, and may discard the container.

There are cases where the information in the container needs additional protection (i.e., privacy protection) so that the currently visited network cannot access the container. The container may be integrity protected and cipher protected according to the embodiments of the present disclosure. Protecting the container based on non-3GPP credentials may take on several forms, such as deriving a key that is used to integrity or privacy protect the container, using a private key directly to integrity or privacy protect the container by a network and a UE uses a public key of the network to validate/verify the container, etc. When either a UE or a home network of the UE sends a private network information container, it may protect the private network information container with credentials used during the UE's primary authentication with the home network. As an example, a public key of a public/private key pair credential may be directly used to protect the container, or a key may be derived/generated based on the credential and used to protect the container. A set of security parameters may be sent along with private network information container, so that the receiver of the private network information container (e.g., the UE or the home network) may be able to determine a protection scheme used to protect the private network information container and derive the necessary information (e.g., a key derived based on the primary authentication, such as Kausf) to perform integrity check and/or decryption of the private network information container if the private network information container is additionally encrypted.

In a case where a UE is connecting to both a public network and a private network (the UE has two home networks, one is public and the other is private) via the same visited network, a NAS message, e.g., the NAS message 400, may include two (2) network information containers (e.g., one for the Public home network and one for the private home network). The NAS message may also include home operator information to differentiate the containers for different home networks. For example, the NAS message may include information of an operator 1 corresponding to the public home network of the UE, and information of an operator 2 corresponding to the private home network of the UE. Each of the public home network and the private home network corresponds to one of the two network information containers in the NAS message. This information about the operators can be communicated inside or outside the private network information container in the NAS message.

In a case when a UE is capable of supporting both a 3GPP based credential (which may mean that the UE is equipped with a UICC) and a non-3GPP credential, one embodiment may also include an indication, e.g., the indication 402 as described with respect to Figure 4, which is sent with a network information container in the same control plane message to indicate whether the network information container is protected by a 3GPP or a non-3GPP key. The indication may indicate a type of credential, which may include a 3GPP or a non-3GPP credential. This indication may also be used in a case where there is a predefined container (e.g., a SoR container as defined in TS 24.501), which may be configured to include information of both public and private networks. For example, the container may include a list of preferred public networks and a list of preferred private networks that the UE can visit when out of the coverage of its home network. In this case, this indication may also indicate a security mechanism used for protecting this container. The private network information container and relevant network functionalities that use the private network information container may require additional security considerations. In some embodiments, an authorization policy or indication may be provided regarding one or more usage restrictions for the private network information container and for those network functionalities that use the private network information container. These usage restrictions may include a location of the UE or a visited network where the container may be used, allowed visited network operators and visited networks in which the container or the related functionalities can be used, a valid time period during which the container is used, and so on. The authorization policy and indication can be provisioned to the UE during the UE's home network authentication and authorization procedure, or the UE's Policy update procedure, for example.

The embodiments are access technology agnostic and can be applied to both new radio (NR) and long term evolution (LTE) networks, or any other access technologies being considered in 3GPP, such as WiFi. Note: Current logic in 3GPP standard is that the private networks using the 3GPP defined standards will follow the 3GPP convention of using AS and/or NAS messages as appropriate.

The private network information container may be extended to become a common critical information container to support both private and public networks. In this case, there may be no separate private and public network containers, instead, a single common container is used. For example, the existing SoR container may be configured to convey information of both private and public networks. The indication as discussed herein may be used for this common container to facilitate the different needs from private networks and public networks. For example, a UE has a private home network and a public home network, each of which may generate a common network information container for sending information to the UE. In this case, the public home network does not need to generate a public network information container separately to send information, and similarly, the private home network does not need to generate a private network information container separately to send information. Thus, public home networks and private home networks may use the same common network information container (e.g., same structure, same fields, and so on) to securely communicate information.

The example embodiments of the present disclosure can support different UE and network deployment scenarios as shown in Table 1 and Table 2 below. The home network of a UE may be a public network or a private network. The visited network may also be a public network or a private network. Table 1 shows a case where the UE has a UICC, and the embodiments of the present application can support and be applied to the scenarios where the home network is private and the visited network is private or public. Table 2 shows a case where the UE does not have a UICC, and the embodiments of the present application can support and be applied to the scenarios where the home network is public or private and the visited network is private or public.

**Table 1**

| | Public visited network | Private visited network |
|---|---|---|
| Public home network | This is prior art | Supported by the embodiments |
| Private home network | Supported by the embodiments | Supported by the embodiments |

**Table 2**

| | Public visited network | Private visited network |
|---|---|---|
| Public home network | Supported by the embodiments | Supported by the embodiments |
| Private home network | Supported by the embodiments | Supported by the embodiments |

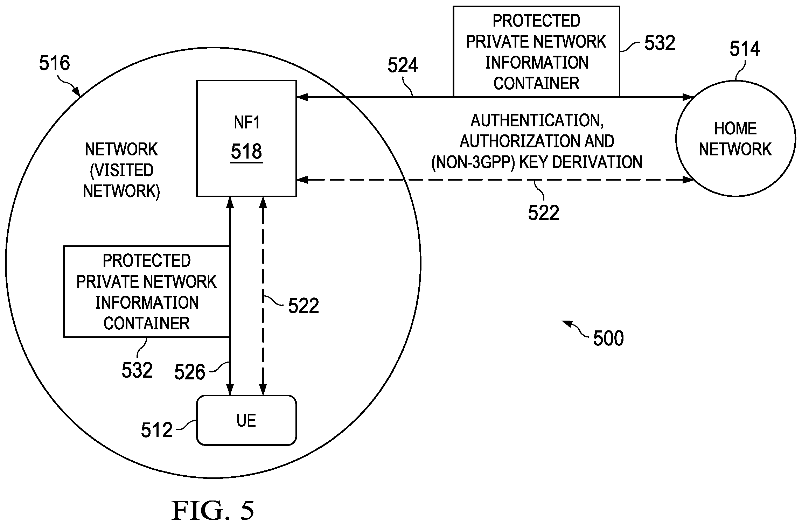

Figure 5 is a diagram illustrating embodiment operations 500 between a UE, a home network of the UE and a visited network of the UE, highlighting communication of a protected private network information container. As shown, a UE 512 may be out of the coverage of its home network 514, and may enter into the coverage of a network 516. The UE 512 may select the network 516 as its visited network and connect to the network 516. The UE 512 may perform primary authentication and authorization with its home network 514 via the network 516 (step 522). The home network 514 may be a private network that does not support 3GPP credentials. The network 516 may be private or public. During the primary authentication and authorization, the home network 514 may generate one or more parameters, e.g., a key, based on a non-3GPP credential, and send to the UE 512 via the visited network 516. The one or more parameters may be used to protect information communicated between the UE 512 and the home network 514. For example, when the home network 514 has information to be sent to the UE 512, it may generate a private network information container including the information, and protect the private network information using the key (and other parameters) and a security mechanism, such as applying integrity protection and/or cipher protection to the private network information container. The home network 514 may then transmit a protected private network information container 532 to the UE 512 via the visited network 516 of the UE 512 (e.g., via a network function 518 of the visited network 516) (steps 524, 526). The home network 514 may transmit a NAS message, e.g., the NAS message as illustrated in Figure 4, to carry the protected private network information container 532.

As an example, the protected private network information container 532 may include a steer instruction instructing the UE 512 to connect to a new visited network, or to perform network re-selection. The protected private network information container 532 may also include a credential to be used by the UE 512 to access the new visited network (e.g., authenticating with the new visited network). When the protected private network information container 532 is successfully verified by the UE 512, the UE 512 may execute the steer instruction to connect to the new visited network, and perform authentication with the new visited network (e.g., using the credential). When the authentication with the new visited network succeeds, the UE 512 may then perform wireless communication through the new visited network, in which case, communication between the UE 512 and the home network 514 will be through the new visited network. An embodiment network information container that is integrity/cipher protected may be used for communicating critical information between the UE 512 and the home network 514 via the new visited network. The network information container may be protected using the same parameters generated during the primary authentication and authorization in step 522. Similarly, when the UE 512 has information to be sent to the home network 514, the UE 512 may generate a protected network information container 532 including the information, and send the protected private network information container to the home network 514 via the visited network 516, e.g., via a NAS message. The NAS message may also include security parameters of the UE, such as a UE security capability. The information sent by the UE 512 to the home network 514 may include a request of the UE 512 requesting to be steered to another visited network. This may be the case when a visited network of the UE does not meet a security requirement/QoS requirement of the UE and the UE wishes to be connected to another visited network. For example, if the visited network's security setting is such that cipher protection, integrity protection or both are turned off for all subsequent communications in the visited network, the UE may request the home network for another preferred visited network. The information sent by the UE 512 to the home network 514 may also include a requirement of a target visited network, and/or a QoS requirement of a service of the UE. Other information may also be sent by the UE using a protected network information container, e.g., a report about a visited network. For example, when a visited network is misbehaving (e.g., requesting the UE for repeated re-authentication with the visited network), the UE wishes to report such situation back to the home network. The protected container in this case can hide such information from the visited network.

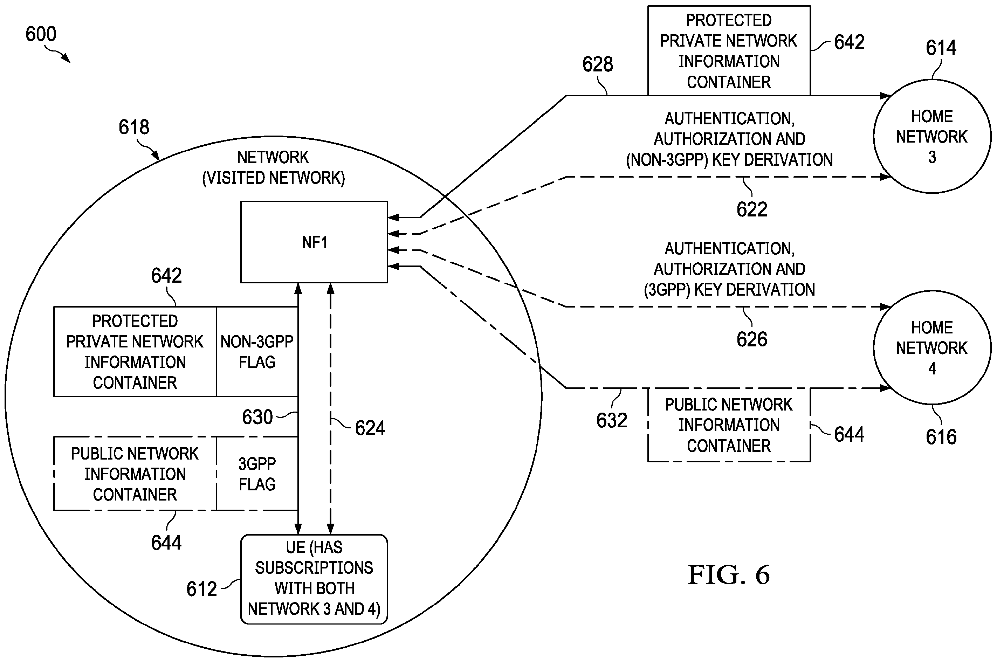

Figure 6 is a diagram illustrating embodiment operations 600 between a UE, two home networks of the UE and a visited network of the UE, highlighting communication of respective protected private network information containers corresponding to the two home networks. In this example, a UE 612 has subscriptions with two networks 614 and 616 (dual subscriptions), i.e., the UE 612 has two home networks. In an example, the home network 614 may be a private network that does not support the 3GPP credentials and the home network 616 may a public network supporting the 3GPP credentials. The UE 612 may be out of the coverage of both of its home networks 614 and 616, and connect to the network 618 as its visited network. This may be the case where both the home networks 614 and 616 instruct the UE 612 to connect to the same visited network 618, or the UE 612 selects the same visited network 618 based on requirements (e.g., steering policies, security policies, QoS requirements, and so on) of both the home networks 614 and 616. The UE 612 may perform primary authentication and authorization with the home network 614 via the network 618 (steps 622, 624). The UE 612 may also perform authentication with the network 618, e.g., after the primary authentication and authorization with the home network 614, based on the credential of the home network 614, e.g., using keys derived from non-3GPP credentials (step 624). The UE 612 may perform primary authentication and authorization with the home network 616 via the network 618 (steps 626, 624). The UE 612 may also perform authentication with the network 618, e.g., after the primary authentication and authorization with the home network 616, based on the credential of the home network 616, e.g., using keys derived from 3GPP credentials (step 624). In a case where the UE 612 connects to two respective visited networks, e.g., based on requirements/steering policies of its two respective home networks (e.g., the UE 612 selects a first visited network based on the requirements of the home network 614, and selects a second visited network based on the requirements of the home network 616), the UE 612 may authenticate and authorize with its respective home networks via the respective visited networks, and may authenticate with its respective visited networks using credentials of the respective home networks.

After the UE 612 is connected to the network 618, the UE 612 and the home network 614 may exchange a private network information container 642 via the visited network 618 (steps 628, 630). The private network information container 642 corresponds to the home network 614. The UE 612 and the home network 616 may also exchange a public network information container 644 via the visited network 618 (steps 630, 632). The public network information container 644 may be protected and corresponds to the home network 616. The private network information container 642 and the public network information container 644 may be integrity and/or cipher protected, and may be sent in a NAS message as discussed with respect to Figure 4. The home network 614 may transmit a non-3GPP flag to the UE 612 to indicate that a non-3GPP credential is to be used by the UE. For example, a key used to verify the protected private network information container 642 or to authenticate/authorize a visited network of the UE 612 may be derived based on the non-3GPP credential. The home network 616 may transmit a 3GPP flag to the UE 612 to indicate that a 3GPP credential is to be used by the UE. For example, a key used to verify the protected public network information container 644 or to authenticate/authorize a visited network of the UE 612 is derived based on the 3GPP credential.

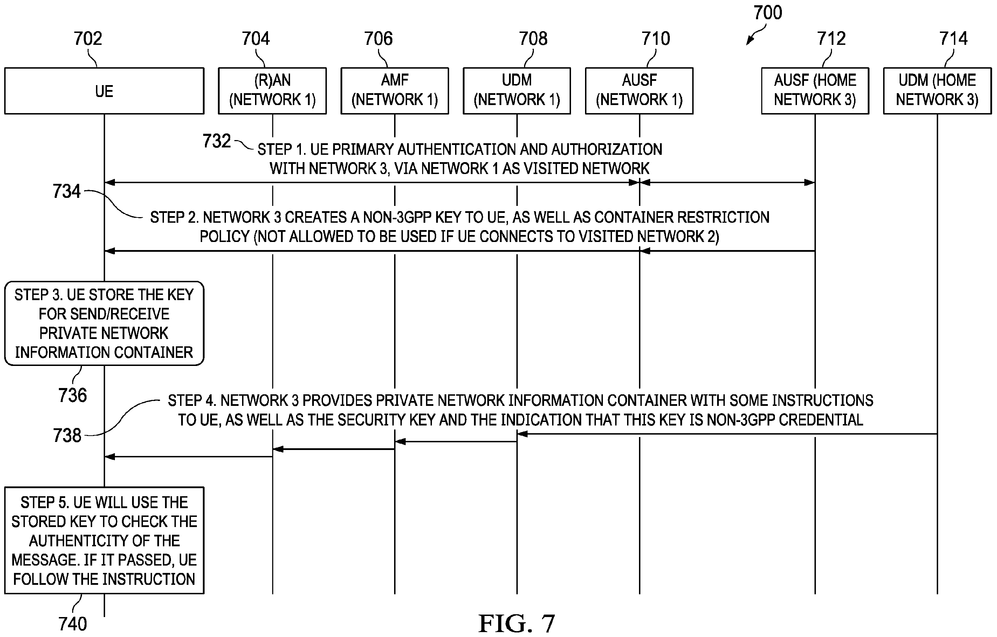

Figure 7 is a diagram of an embodiment method 700 for private network information container key and policy provisioning. As shown, a UE 702 out of the coverage of its private home network 3 selects a visited private network 1 (may also be referred to as network 1, or visited network 1 in the following description), and successfully conducts primary authentication and authorization with its private home network 3 via the visited private network 1 (Step 1 732). This may be performed through interactions between the visited private network 1 (e.g., via a (radio) access network ((R)AN) 704 of the network 1, an access and mobility management function (AMF) 706 of the network 1, a UDM 708 of the network 1, and/or an authentication server function (AUSF) 710 of the network 1), and the home network 3 (e.g., via an AUSF 712 of the home network 3). The primary authentication and authorization is between the UE 702 and its home network 3. During the primary authentication and authorization, the home network 3 may generate security parameters that may be used to protect information communicated between the home network 3 and the UE 702, and/or may be used for authentication between the UE 702 and the visited network 1. When the UE 702 is authenticated and authorized successfully, the home network 3 may inform the visited network 1 that the UE 702 is authenticated and authorized. The visited network 1 may then determine whether to allow the UE 702 to continue to access the visited network 1, or it may request the UE 702 to perform a secondary authentication with the visited network 1. In this example of Figure 7, the visited network 1 does not request the UE 702 to perform the secondary authentication. The home network 3 may provide, e.g., via the AUSF 710 of the network 1 and the AUSF 712 of the home network 3, the UE 702 with a key created based on a non-3GPP credential (to protect a container), new security parameters to be used for a private network information container, as well as a policy (restriction policy) for using the private network information container, e.g., specifying whether to allow the UE 702 to use the private network information container when the UE 702 is connected to a visited private network 2 (step 2 734). As an example, the forgoing information provided by the home network 3 may be generated by the home network 3 during the primary authentication and authorization with the UE 702. The new security parameters and policy may not need to be provided to the UE 702 for every authentication and authorization procedure, as the information may be stored in memory of the UE 702 for long term use. The step 2 734 can occur during an authorization phase, or a policy update procedure, or other procedure which allows the home network 3 to update a configuration and policy of the UE 702. The UE 702 may store the key, the security parameters and the policy for use with future private network information containers (step 3 736). The key may be used for sending or receiving a private network information container. For example, the key and the security parameter may be used to verify a private network information container sent by the home network 3 to the UE 702 via the visited network 1. In an example where a public/private key mechanism is used by the home network 3 to protect the container, the key may be a public key sent by the home network 3. The public key may then be used to verify the private network information container, e.g., as shown in a step 5 740 of Figure 7. In an embodiment, the home network 3 may not send the key to the UE in step 2 734. In this case, the UE 702 may derive the key based on the credential indicated in step 4 738 of Figure 7, and verify the private network information container using the derived key.

When the home network 3 wants to send information, e.g., an instruction, to the UE 702 that needs privacy/integrity protection, the home network 3 may send, to the UE 702 via the visited network 1, a protected private network information container which contains the instruction, a security key and an indication indicating that the security key is based on a non-3GPP credential (step 4 738). The instruction in this example may steer the UE 702 to another visited network different than the visited network 1. The security key may be used by the UE 702 to access the another visited network. The information in step 4 738 may be sent from a UDM 714 of the home network 3 to the UDM 708 of the network 1, to the AMF 706 of the network 1, to the RAN 704 of the network 1 and to the UE 702. The information may be sent in a NAS message, e.g., the NAS message 400 as illustrated in Figure 4, in which case, the security key may be sent as part of the security parameter 404. The UE 702 may use the stored key (may also use one or more of the new security parameters send in step 2 734, and/or one or more security parameter carried in the NAS message) to check the authenticity of the message (verifying/authenticating the protected private network information container), and if it passed, the UE 702 follows and execute the instruction (step 5, 740). The UE 702 may verify the protected private network information container using security parameters, such as those described with respect to Figure 4. The UE 702 may verify integrity and privacy of the protected private network information container. As an example, to verify the protected private network information container, the UE 702 may calculate a message authentication code (MAC) using the key stored by the UE 702 in step 736, a synchronization quantity (which may be sent by the home network 1 to the UE 702 in step 2 734 or step 4 738), and the container (and potentially other information), and verify that the MAC calculated is the same as the one attached to the message that carries the container. The UE 702 may also perform decryption of the message (if encrypted), e.g., based on security parameters sent by the home network 1.

Figure 7 merely shows an example for a private home network to deliver a private network information container to a UE. The UE may also send a private network information container to its private home network with a similar procedure as shown in Figure 7. In this case, steps similar to steps 1-3 of Figure 7 may be performed. However, in step 4 738, the UE uses an uplink control message to send the container to the home private network, and step 5 740 is not needed.

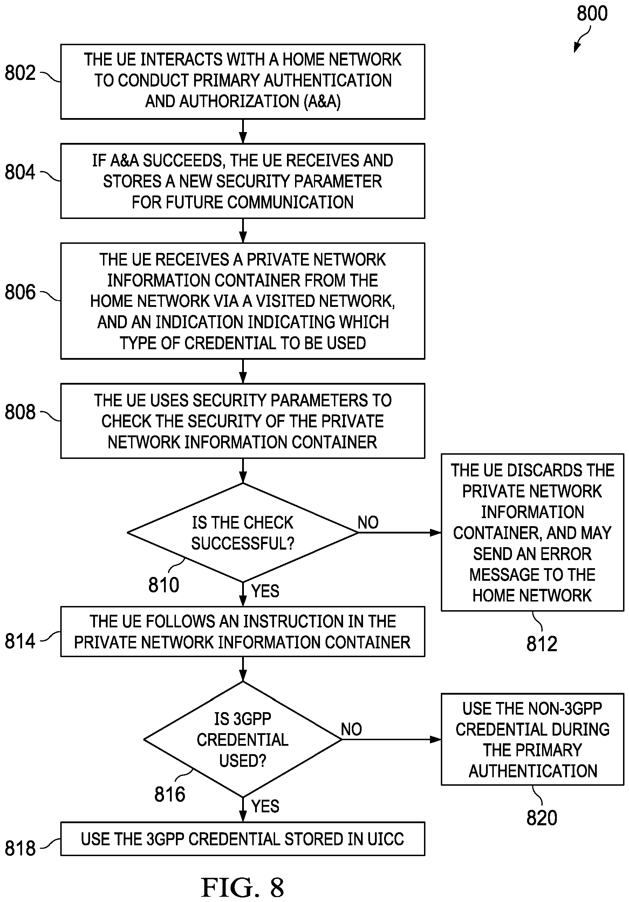

Figure 8 is a flowchart illustrating an embodiment method 800 for wireless communications. The method 800 may be indicative of operations of a UE. As shown, at step 802, The UE interacts with its home network to conduct primary authentication and authorization (A&A). This may be performed when the UE is connecting/accessing the home network. The home network in this example is a private network. At step 804, if the A&A is successfully conducted, the UE receives and stores one or more new security parameter for future communication with the home network, such as a public key. At step 806, the UE may receive a private network information container from the home network via a visited network, and an indication indicating which type of credential to be used. This may be the case when the UE is out of the coverage of the home network and connected to the visited network. At step 808, the UE may use security parameters to check security of the private network information container, e.g., by checking the integrity and/or privacy (by decrypting the container) of the container. The security parameters may be sent by the home network along with the private network information container, or within the private network information container, or before transmitting the private network information container. At step 810, the UE determines whether the security check is successful. At step 812, if the check is not successful, the UE may discard the private network information container, and may send an error message to the home network, indicating that the private network information container is not successfully received. At step 814, if the check is successful, the UE may obtain information contained in the private network information container, such as one or more instructions, and follow and execute the instructions. For example, the private network information container may include a steering instruction instructing the UE to connect to another visited network, which may be more preferred by the home network. To execute the instruction, e.g., to connect to the another visited network, at step 816, the UE may check whether a 3GPP credential is to be used, e.g., authenticating with the another visited network. This may be performed based on the indication received at step 806. When the indication indicating that a 3GPP credential is to be used, at step 818, the UE uses the 3GPP credential stored in a UICC. When the indication indicating that a non-3GPP credential is to be used, at step 820, the UE uses a non-3GPP credential obtained during the primary authentication in step 802.

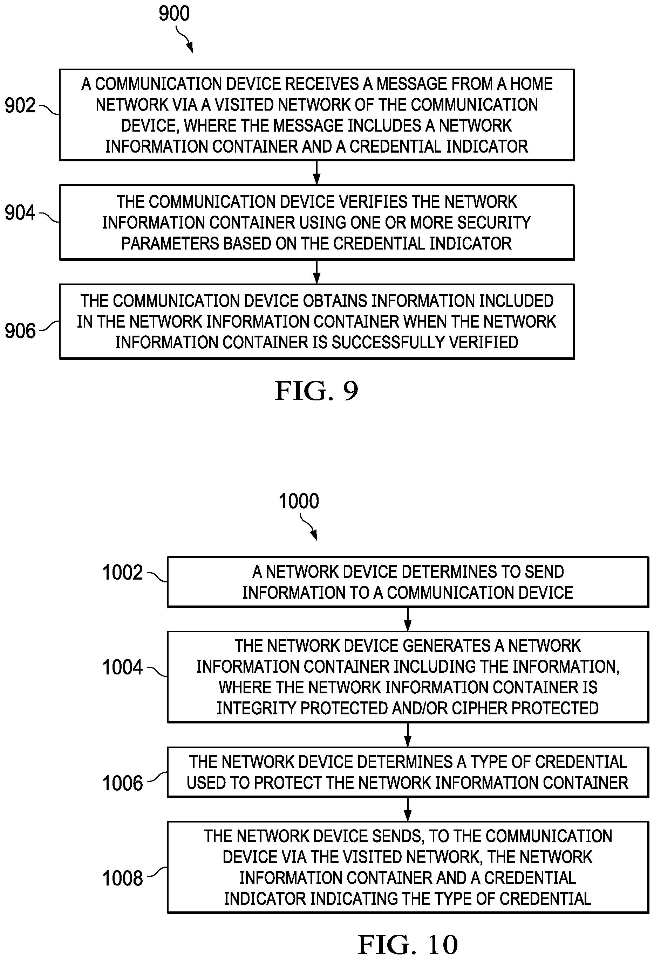

Figure 9 is a flowchart illustrating another embodiment method 900 for wireless communications. The method 900 may be indicative of operations performed by a communication device, e.g., a UE. The communication device is out of coverage of its home network and is communicating with the home network via a visited network. As shown, the communication device receives a message from the home network via the visited network, where the message includes a network information container and a credential indicator (step 902). The network information container includes information that is integrity protected and/or cipher protected. The credential indicator indicates a type of a credential used for protecting the network information container. The communication device may verify the network information container using one or more security parameters based on the credential indication (step 904). The communication device may obtain the information included in the network information container when the network information container is successfully verified (step 906). The communication device may then perform further operations based on the information in the network information container. For example, the information may include a steering instruction instructing the communication device to connect to another visited network, in which case, the communication device may execute the instruction to connect and access the another visited network, e.g., based on the type of credential indicated (for example, using a key derived based on the type of credential). As another example, the information may include an instruction instructing the communication device to perform cell selection to select a new visited network from a list of preferred networks provided by the home network, in which case, the communication device may select a network from the list of preferred networks as a new visited network and connect to the selected network, e.g., based on the type of credential indicated. If the network information container is not successfully verified, the communication device may discard the network information container. In this case, the communication device may send a message to the home network indicating that the network information container is not successfully received.

Figure 10 is a flowchart illustrating another embodiment method 1000 for wireless communications. The method 1000 may be indicative of operations performed by a network device of a network. In this example, the network is a home network of a communication device. The communication device is out of coverage of the home network and communicates with the home network via a visited network. As shown, the network device determines to send information to the communication device (step 1002), and generates a network information container including the information, where the network information container is integrity protected and/or cipher protected (step 1004). The network device determines a type of credential used to protect the network information container (step 1006). The network device then sends, to the communication device via the visited network, the network information container and a credential indicator indicating the type of credential (step 1008).

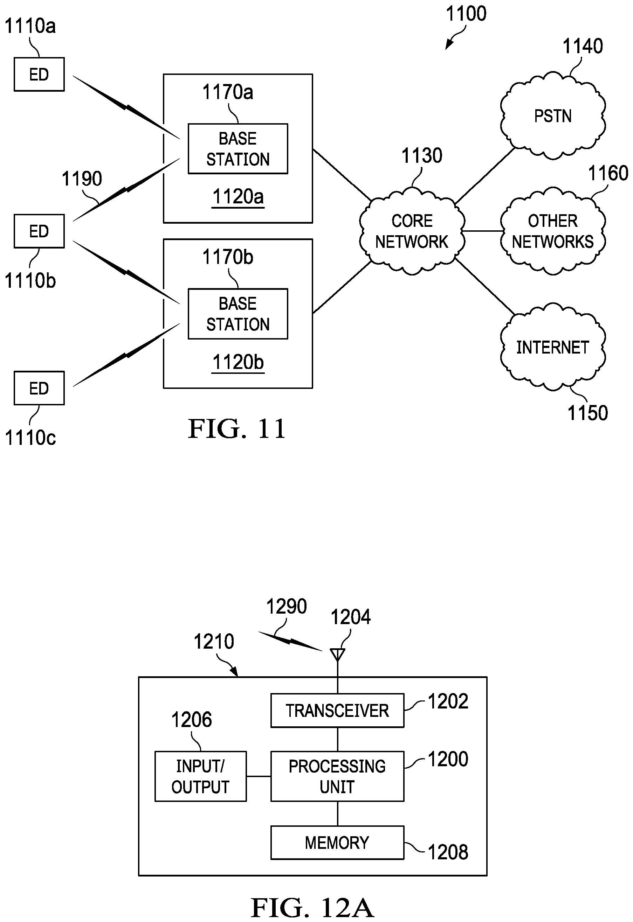

Figure 11 illustrates an example communication system 1100, where embodiments of the present application may be applied. In general, the system 1100 enables multiple wireless or wired users to transmit and receive data and other content. The system 1100 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 1100 includes electronic devices (ED) 1110a-1110c, radio access networks (RANs) 1120a-1120b, a core network 1130, a public switched telephone network (PSTN) 1140, the Internet 1150, and other networks 1160. While certain numbers of these components or elements are shown in Figure 11, any number of these components or elements may be included in the system 1100.

The EDs 1110a-1110c are configured to operate or communicate in the system 1100. For example, the EDs 1110a-1110c are configured to transmit or receive via wireless or wired communication channels. Each ED 1110-1110c represents any suitable end user device and may include such devices (or may be referred to) as a user equipment or device (UE), wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 1120a-1120b here include base stations 1170a-1170b, respectively. Each base station 1170a-1170b is configured to wirelessly interface with one or more of the EDs 1110a-1110c to enable access to the core network 1130, the PSTN 1140, the Internet 1150, or the other networks 1160. For example, the base stations 1170a-1170b may include (or be) one or more of several well-known devices, such as a base transceiver station (BTS), a Node-B (NodeB), an evolved NodeB (eNodeB), a Next Generation (NG) NodeB (gNB), a Home NodeB, a Home eNodeB, a site controller, an access point (AP), or a wireless router. The EDs 1110a-1110c are configured to interface and communicate with the Internet 1150 and may access the core network 1130, the PSTN 1140, or the other networks 1160.

In the embodiment shown in Figure 11, the base station 1170a forms part of the RAN 1120a, which may include other base stations, elements, or devices. Also, the base station 1170b forms part of the RAN 1120b, which may include other base stations, elements, or devices. Each base station 1170a-1170b operates to transmit or receive wireless signals within a particular geographic region or area, sometimes referred to as a "cell." In some embodiments, multiple-input multiple-output (MIMO) technology may be employed having multiple transceivers for each cell.

The base stations 1170a-1170b communicate with one or more of the EDs 1110a-1110c over one or more air interfaces 11110 using wireless communication links. The air interfaces 11110 may utilize any suitable radio access technology.

It is contemplated that the system 1100 may use multiple channel access functionality, including such schemes as described above. In particular embodiments, the base stations and EDs implement 5G New Radio (NR), LTE, LTE-A, or LTE-B. Of course, other multiple access schemes and wireless protocols may be utilized.

The RANs 1120a-1120b are in communication with the core network 1130 to provide the EDs 1110a-1110c with voice, data, application, Voice over Internet Protocol (VoIP), or other services. Understandably, the RANs 1120a-1120b or the core network 1130 may be in direct or indirect communication with one or more other RANs (not shown). The core network 1130 may also serve as a gateway access for other networks (such as the PSTN 1140, the Internet 1150, and the other networks 1160). In addition, some or all of the EDs 1110a-1110c may include functionality for communicating with different wireless networks over different wireless links using different wireless technologies or protocols. Instead of wireless communication (or in addition thereto), the EDs may communicate via wired communication channels to a service provider or switch (not shown), and to the Internet 1150.

Although Figure 11 illustrates one example of a communication system, various changes may be made to Figure 11. For example, the communication system 1100 could include any number of EDs, base stations, networks, or other components in any suitable configuration.

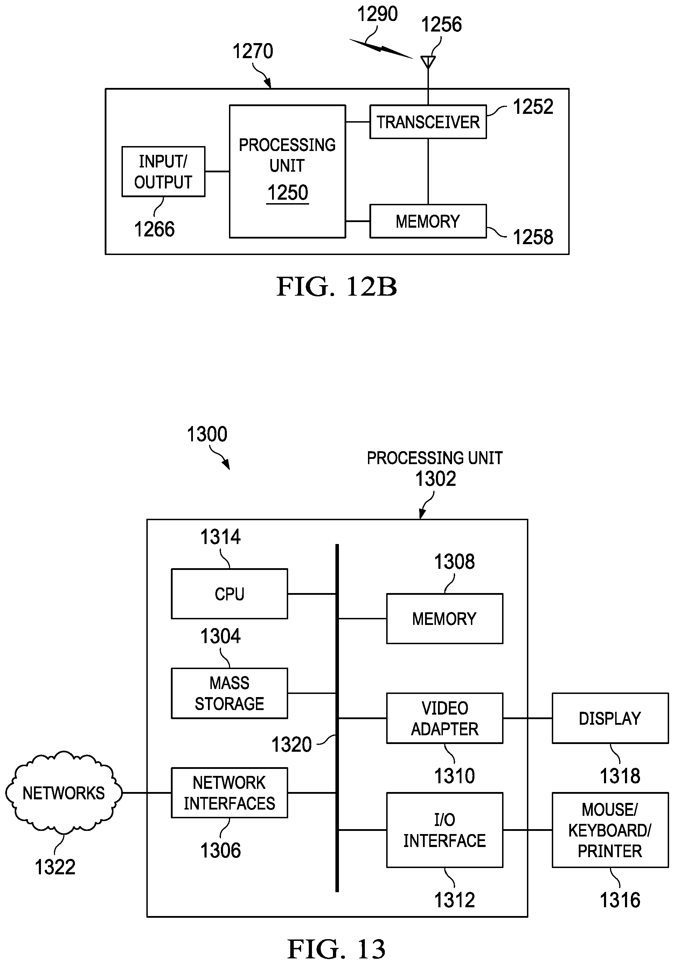

Figures 12A and 12B illustrate example devices that may implement the methods and teachings according to this disclosure. In particular, Figure 12A illustrates an example ED 1210 (e.g., a UE), and Figure 12B illustrates an example base station 1270. These components could be used in the system 1100 or in any other suitable system.

As shown in Figure 12A, the ED 1210 includes at least one processing unit 1200. The processing unit 1200 implements various processing operations of the ED 1210. For example, the processing unit 1200 could perform signal coding, data processing, power control, input/output processing, or any other functionality enabling the ED 1210 to operate in the system 1100. The processing unit 1200 also supports the methods and teachings described in more detail above. Each processing unit 1200 includes any suitable processing or computing device configured to perform one or more operations. Each processing unit 1200 could, for example, include a microprocessor, microcontroller, digital signal processor, field programmable gate array, or application specific integrated circuit.

The ED 1210 also includes at least one transceiver 1202. The transceiver 1202 is configured to modulate data or other content for transmission by at least one antenna or NIC (Network Interface Controller) 1204. The transceiver 1202 is also configured to demodulate data or other content received by the at least one antenna 1204. Each transceiver 1202 includes any suitable structure for generating signals for wireless or wired transmission or processing signals received wirelessly or by wire. Each antenna 1204 includes any suitable structure for transmitting or receiving wireless or wired signals. One or multiple transceivers 1202 could be used in the ED 1210, and one or multiple antennas 1204 could be used in the ED 1210. Although shown as a single functional unit, a transceiver 1202 could also be implemented using at least one transmitter and at least one separate receiver.

The ED 1210 further includes one or more input/output devices 1206 or interfaces (such as a wired interface to the Internet 1150). The input/output devices 1206 facilitate interaction with a user or other devices (network communications) in the network. Each input/output device 1206 includes any suitable structure for providing information to or receiving information from a user, such as a speaker, microphone, keypad, keyboard, display, or touch screen, including network interface communications.

In addition, the ED 1210 includes at least one memory 1208. The memory 1208 stores instructions and data used, generated, or collected by the ED 1210. For example, the memory 1208 could store software or firmware instructions executed by the processing unit(s) 1200 and data used to reduce or eliminate interference in incoming signals. Each memory 1208 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 12B, the base station 1270 includes at least one processing unit 1250, at least one transceiver 1252, which includes functionality for a transmitter and a receiver, one or more antennas 1256, at least one memory 1258, and one or more input/output devices or interfaces 1266. A scheduler, which would be understood by one skilled in the art, is coupled to the processing unit 1250. The scheduler could be included within or operated separately from the base station 1270. The processing unit 1250 implements various processing operations of the base station 1270, such as signal coding, data processing, power control, input/output processing, or any other functionality. The processing unit 1250 can also support the methods and teachings described in more detail above. Each processing unit 1250 includes any suitable processing or computing device configured to perform one or more operations. Each processing unit 1250 could, for example, include a microprocessor, microcontroller, digital signal processor, field programmable gate array, or application specific integrated circuit.

Each transceiver 1252 includes any suitable structure for generating signals for wireless or wired transmission to one or more EDs or other devices. Each transceiver 1252 further includes any suitable structure for processing signals received wirelessly or by wire from one or more EDs or other devices. Although shown combined as a transceiver 1252, a transmitter and a receiver could be separate components. Each antenna 1256 includes any suitable structure for transmitting or receiving wireless or wired signals. While a common antenna 1256 is shown here as being coupled to the transceiver 1252, one or more antennas 1256 could be coupled to the transceiver(s) 1252, allowing separate antennas 1256 to be coupled to the transmitter and the receiver if equipped as separate components. Each memory 1258 includes any suitable volatile or non-volatile storage and retrieval device(s). Each input/output device 1266 facilitates interaction with a user or other devices (network communications) in the network. Each input/output device 1266 includes any suitable structure for providing information to or receiving/providing information from a user, including network interface communications.

Figure 13 is a block diagram of a computing system 1300 that may be used for implementing the devices and methods disclosed herein. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1300 includes a processing unit 1302. The processing unit includes a central processing unit (CPU) 1314, memory 1308, and may further include a mass storage device 1304, a video adapter 1310, and an I/O interface 1312 connected to a bus 1320.

The bus 1320 may be one or more of any type of several bus architectures including a memory bus or memory controller, a peripheral bus, or a video bus. The CPU 1314 may comprise any type of electronic data processor. The memory 1308 may comprise any type of non-transitory system memory such as static random access memory (SRAM), dynamic random access memory (DRAM), synchronous DRAM (SDRAM), read-only memory (ROM), or a combination thereof. In an embodiment, the memory 1308 may include ROM for use at boot-up, and DRAM for program and data storage for use while executing programs.

The mass storage 1304 may comprise any type of non-transitory storage device configured to store data, programs, and other information and to make the data, programs, and other information accessible via the bus 1320. The mass storage 1304 may comprise, for example, one or more of a solid state drive, hard disk drive, a magnetic disk drive, or an optical disk drive.

The video adapter 1310 and the I/O interface 1312 provide interfaces to couple external input and output devices to the processing unit 1302. As illustrated, examples of input and output devices include a display 1318 coupled to the video adapter 1310 and a mouse, keyboard, or printer 1316 coupled to the I/O interface 1312. Other devices may be coupled to the processing unit 1302, and additional or fewer interface cards may be utilized. For example, a serial interface such as Universal Serial Bus (USB) (not shown) may be used to provide an interface for an external device.

The processing unit 1302 also includes one or more network interfaces 1306, which may comprise wired links, such as an Ethernet cable, or wireless links to access nodes or different networks. The network interfaces 1306 allow the processing unit 1302 to communicate with remote units via the networks. For example, the network interfaces 1306 may provide wireless communication via one or more transmitters/transmit antennas and one or more receivers/receive antennas. In an embodiment, the processing unit 1302 is coupled to a local-area network 1322 or a wide-area network for data processing and communications with remote devices, such as other processing units, the Internet, or remote storage facilities.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a verifying unit/module, an integrity checking unit/module, an obtaining unit/module, an encrypting/decrypting unit/module, an instructing unit/module, an accessing unit/module, a discarding unit/module, a performing unit/module, an authenticating and authorizing unit/module, a determining unit/module, a generating unit/module, and/or an integrity protecting unit/module. The respective units/modules may be hardware, software, or a combination thereof. For instance, one or more of the units/modules may be an integrated circuit, such as field programmable gate arrays (FPGAs) or application-specific integrated circuits (ASICs).

Although the description has been described in detail, it should be understood that various changes, substitutions and alterations can be made without departing from the spirit and scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

## Claims

1. A method performed by a communication device, the method comprising the steps of:
• receiving (step 902), via a first visited network of the communication device, a message from a first home network of the communication device, the message comprising a first network information container and a credential indicator,
∘ wherein the first network information container comprises information that is integrity protected and/or cipher protected,
∘ wherein the credential indicator indicates a type of a credential used for protecting the first network information container, the type of the credential being either a 3GPP credential or non-3GPP credential, wherein the credential indicator is a flag bit, wherein a first value of the flag bit indicates that the credential is a 3GPP credential and a second value of the flag bit indicates that the credential is a non-3GPP credential;
• verifying (step 904), the first network information container using one or more security parameters based on the type of credential; and
• obtaining (step 906), when the first network information container is successfully verified, the information comprised in the first network information container.

2. The method of claim 1, wherein the message further comprises information indicating a type of protection mechanism applied to protect the first network information container.

3. The method of claim 2, wherein the type of protection mechanism comprises integrity only protection, cipher only protection, or integrity and cipher protection.

4. The method of any one of claims 1 - 3, wherein verifying the first network information container comprising:
verifying integrity of the first network information container using the one or more security parameters; and/or
decrypting the first network information container using the one or more security parameters.

5. The method of any one of claims 1 - 4, wherein the one or more security parameters comprise one or more of the following:
∘ a security parameter for verifying the first network information container, or accessing a network, the security parameter including a certificate, a public key or a privacy key;
∘ a key identifier;
∘ a synchronization or freshness quantity;
∘ a nonce, or
∘ a network security preference.

6. The method of any one of claims 1 - 5, further comprising:
executing an instruction comprised in the first network information container when the first network information container is successfully verified.

7. The method of claim 6, wherein the instruction:
instructs the communication device to connect to a second visited network; or
instructs the communication device to conduct network selection to select a new visited network based on a list of candidate network provided by the first home network.

8. The method of claim 7, further comprising:
accessing the second visited network or the new visited network using the type of the credential indicated by the credential indicator and/or information in the first network information container.

9. The method of claim 7, wherein the second visited network is a preferred network configured by the first home network for the communication device.

10. The method of any one of claims 1 - 9, further comprising:
sending a second network information container to the first home network via the first visited network, the second network information container comprising information that is integrity protected and/or cipher protected.

11. The method of any one of claims 1 - 5, further comprising:
discarding the first network information container when the first network information container is not successfully verified.

12. The method of any one of claims 1- 11, wherein the first network information container comprises least one of following:
a network steering instruction;
a network steering policy;
a list of preferred visited networks for the communication device;
a quality of service, QoS, requirement for a service or a visited network;
configuration and/or capability information for the communication device; or
a security parameter.

13. A method performed by a network device of a first network, the method comprising the steps of:
• determining (step 1002) to send first information to a communication device, the first network being a home network of the communication device, and the communication device being served by a first visited network;
• generating (step 1004) a network information container comprising the first information, the network information container being integrity protected and/or cipher protected;
• determining (step 1006) a type of credential used to protect the network information container, the type of the credential being either a 3GPP credential or non-3GPP credential,; and
• sending (step 1008) a message to the communication device via the first visited network, the message comprising the network information container and a credential indicator indicating the type of credential, wherein the credential indicator is a flag bit, wherein a first value of the flag bit indicates that the credential is a 3GPP credential and a second value of the flag bit indicates that the credential is a non-3GPP credential, in order for the communication device to verify the first network information container using one or more security parameters based on the type of credential.

14. The method of claim 13, wherein the network information container comprises at least one of following:
a network steering instruction;
a network steering policy;
a list of preferred visited networks for the communication device;
a quality of service, QoS, requirement for a service or a visited network;
configuration and/or capability information for the communication device; or
a security parameter.

15. The method of claim 14, wherein the network steering instruction:
instructs the communication device to connect to a second visited network; or
instructs the communication device to conduct network selection to select a new visited network based on a list of candidate network provided by the home network.

16. The method of any one of claims 13 - 15, wherein the message further comprises one or more security parameters used for verifying the network information container.

17. The method of claim 16, wherein the one or more security parameters comprise one or more of following:
∘ a security parameter for verifying the network information container, or accessing a network, the security parameter including a certificate, a public key or a privacy key;
∘ a key identifier;
∘ a synchronization or freshness quantity;
∘ a nonce, or
∘ a network security preference.

18. The method of any one of claims 13 - 17, wherein the network information container comprises information for accessing a public network and information for accessing a private network.

19. A communication device configured to perform any of the methods according to claims 1 - 12.

20. A network device configured to perform any of the methods according to claims 13 - 18.

21. A computer readable storage medium storing a computer program or instructions, wherein, when the computer program or the instructions are executed by a communication device, the communication device is caused to perform any of the methods according to claims 1 - 12.

22. A computer readable storage medium storing a computer program or instructions, wherein, when the computer program or the instructions are executed by a network device, the network device is caused to perform any of the methods according to claims 13 - 18.

## Patentansprüche

1. Verfahren, das durch eine Kommunikationsvorrichtung durchgeführt wird, wobei das Verfahren die folgenden Schritte umfasst:
• Empfangen (Schritt 902) einer Nachricht von einem ersten Heimnetzwerk der Kommunikationsvorrichtung über ein erstes besuchtes Netzwerk der Kommunikationsvorrichtung, wobei die Nachricht einen ersten Netzwerk-Informationscontainer und einen Anmeldedatenindikator umfasst,
∘ wobei der erste Netzwerk-Informationscontainer Information umfasst, die integritätsgeschützt und/oder chiffriergeschützt ist,
∘ wobei der Anmeldedatenindikator einen Typ von Anmeldedaten angibt, der zum Schützen des ersten Netzwerk-Informationscontainers verwendet wird, wobei der Typ der Anmeldedaten entweder 3GPP oder Nicht-3GPP ist, wobei der Anmeldedatenindikator ein Flagbit ist, wobei ein erster Wert des Flagbits angibt, dass die Anmeldedaten 3GPP-Anmeldedaten sind, und ein zweiter Wert des Flagbits angibt, dass die Anmeldedaten Nicht-3GPP-Anmeldedaten sind;
• Verifizieren (Schritt 904) des ersten Netzwerk-Informationscontainers unter Verwendung eines oder mehrerer Sicherheitsparameter auf Grundlage des Typs der Anmeldedaten; und
• wenn der erste Netzwerk-Informationscontainer erfolgreich verifiziert wurde, Erlangen (Schritt 906) der Information, die der erste Netzwerk-Informationscontainer umfasst.

2. Verfahren nach Anspruch 1, wobei die Nachricht ferner Information umfasst, die einen Typ von Schutzmechanismus angibt, der zum Schützen des ersten Netzwerk-Informationscontainers angewendet wird.

3. Verfahren nach Anspruch 2, wobei der Typ von Schutzmechanismus einen Integritätsschutz, einen Chiffriersschutz oder einen Integritäts- und Chiffriersschutz umfasst.

4. Verfahren nach einem der Ansprüche 1 bis 3, wobei das Verifizieren des ersten Netzwerk-Informationscontainers Folgendes umfasst:
Verifizieren der Integrität des ersten Netzwerk-Informationscontainers unter Verwendung des einen oder der mehreren Sicherheitsparameter; und/oder
Entschlüsseln des ersten Netzwerk-Informationscontainers unter Verwendung des einen oder der mehreren Sicherheitsparameter.

5. Verfahren nach einem der Ansprüche 1 bis 4, wobei der eine oder die mehreren Sicherheitsparameter eines oder mehrere der Folgenden umfassen:
∘ einen Sicherheitsparameter zum Verifizieren des ersten Netzwerk-Informationscontainers oder zum Zugreifen auf ein Netzwerk, wobei der Sicherheitsparameter ein Zertifikat, einen öffentlichen Schlüssel oder einen Geheimhaltungsschlüssel beinhaltet;
∘ eine Schlüsselkennung;
∘ eine Synchronisations- oder Frischemenge;
∘ eine Nonce, oder
∘ eine Netzwerksicherheitseinstellung.

6. Verfahren nach einem der Ansprüche 1 bis 5, ferner umfassend: Ausführen einer im ersten Netzwerk-Informationscontainer enthaltenen Anweisung, wenn der erste Netzwerk-Informationscontainer erfolgreich verifiziert wurde.

7. Verfahren nach Anspruch 6, wobei die Anweisung:
die Kommunikationsvorrichtung anweist, sich mit einem zweiten besuchten Netzwerk zu verbinden; oder
die Kommunikationsvorrichtung anweist, eine Netzwerkauswahl durchzuführen, um ein neues besuchtes Netzwerk auf Grundlage einer Liste von Kandidaten auszuwählen, die vom ersten Heimnetzwerk bereitgestellt wird.

8. Verfahren nach Anspruch 7, ferner umfassend:
Zugreifen auf das zweite besuchte Netzwerk oder das neue besuchte Netzwerk unter Verwendung des Typs der Anmeldedaten, der vom Anmeldedatenindikator angegeben wurde, und/oder von Information in dem ersten Netzwerk-Informationscontainer.

9. Verfahren nach Anspruch 7, wobei das zweite besuchte Netzwerk ein bevorzugtes Netzwerk ist, das durch das erste Heimnetzwerk für die Kommunikationsvorrichtung konfiguriert wurde.

10. Verfahren nach den Ansprüchen 1 bis 9, ferner umfassend:
Senden eines zweiten Netzwerk-Informationscontainers an das erste Heimnetzwerk über das erste besuchte Netzwerk, wobei der zweite Netzwerk-Informationscontainer integritätsgeschützte und/oder chiffriergeschützte Informationen umfasst.

11. Verfahren nach einem der Ansprüche 1 bis 5, ferner umfassend:
Verwerfen des ersten Netzwerk-Informationscontainers, wenn der erste Netzwerk-Informationscontainer nicht erfolgreich verifiziert wurde.

12. Verfahren nach einem der Ansprüche 1 bis 11, wobei der erste Netzwerk-Informationscontainer mindestens eines der Folgenden umfasst:
eine Netzwerksteuerungsanweisung;
eine Richtlinie zur Steuerung des Netzwerks;
eine Liste der bevorzugten besuchten Netzwerke für die Kommunikationsvorrichtung;
eine Dienstgüte (QoS - Quality of Service)-Anforderung für einen Dienst oder ein besuchtes Netz;
Konfigurations- und/oder Kapazitätsinformationen für die Kommunikationsvorrichtung; oder
einen Sicherheitsparameter.

13. Verfahren, das durch eine Netzwerkvorrichtung eines ersten Netzwerks durchgeführt wird, wobei das Verfahren folgende Schritte umfasst:
• Bestimmen (Schritt 1002), dass erste Informationen an eine Kommunikationsvorrichtung gesendet werden, wobei das erste Netzwerk ein Heimnetzwerk der Kommunikationsvorrichtung ist und die Kommunikationsvorrichtung von einem ersten besuchten Netzwerk bedient wird;
• Erzeugen (Schritt 1004) eines Netzwerk-Informationscontainers, der die ersten Informationen umfasst, wobei der Netzwerk-Informationscontainer integritätsgeschützt und/oder chiffriergeschützt ist;
• Bestimmen (Schritt 1006) eines Typs von Anmeldedaten, der zum Schützen des Netzwerk-Informationscontainers verwendet wird, wobei der Typ der Anmeldedaten entweder 3GPP oder Nicht-3GPP ist; und
• Senden (Schritt 1008) einer Nachricht an die Kommunikationsvorrichtung über das erste besuchte Netzwerk, wobei die Nachricht den Netzwerk-Informationscontainer und einen Anmeldedatenindikator umfasst, der den Typ von Anmeldedaten angibt, wobei der Anmeldedatenindikator ein Flagbit ist, wobei ein erster Wert des Flagbits angibt, dass die Anmeldedaten 3GPP-Anmeldedaten sind, und ein zweiter Wert des Flagbits angibt, dass die Anmeldedaten Nicht-3GPP-Anmeldedaten sind, damit die Kommunikationsvorrichtung den ersten Netzwerk-Informationscontainer unter Verwendung eines oder mehrerer Sicherheitsparameter auf Grundlage des Typs von Anmeldedaten verifiziert.

14. Verfahren nach Anspruch 13, wobei der Netzwerk-Informationscontainer mindestens eines der Folgenden umfasst:
eine Netzwerksteuerungsanweisung;
eine Richtlinie zur Steuerung des Netzwerks;
eine Liste der bevorzugten besuchten Netzwerke für die Kommunikationsvorrichtung;
eine Dienstgüte (QoS - Quality of Service)-Anforderung für einen Dienst oder ein besuchtes Netz;
Konfigurations- und/oder Kapazitätsinformationen für die Kommunikationsvorrichtung; oder
einen Sicherheitsparameter.

15. Verfahren nach Anspruch 14, wobei die Netzwerksteuerungsanweisung:
die Kommunikationsvorrichtung anweist, sich mit einem zweiten besuchten Netzwerk zu verbinden; oder
die Kommunikationsvorrichtung anweist, eine Netzwerkauswahl durchzuführen, um ein neues besuchtes Netzwerk auf Grundlage einer Liste von Kandidaten auszuwählen, die vom Heimnetzwerk bereitgestellt wird.

16. Verfahren nach einem der Ansprüche 13 bis 15, wobei die Nachricht ferner einen oder mehrere Sicherheitsparameter umfasst, die zum Verifizieren des Netzwerk-Informationscontainers verwendet werden.

17. Verfahren nach Anspruch 16, wobei der eine oder die mehreren Sicherheitsparameter eines oder mehrere der Folgenden umfassen:
∘ einen Sicherheitsparameter zum Verifizieren des Netzwerk-Informationscontainers oder zum Zugreifen auf ein Netzwerk, wobei der Sicherheitsparameter ein Zertifikat, einen öffentlichen Schlüssel oder einen Geheimhaltungsschlüssel beinhaltet;
∘ eine Schlüsselkennung;
∘ eine Synchronisations- oder Frischemenge;
∘ eine Nonce, oder
∘ eine Netzwerksicherheitseinstellung.

18. Verfahren nach einem der Ansprüche 13 bis 17, wobei der Netzwerk-Informationscontainer Information zum Zugreifen auf ein öffentliches Netzwerk und Information zum Zugreifen auf ein privates Netzwerk umfasst.

19. Kommunikationsvorrichtung, die dazu konfiguriert ist, eines der Verfahren nach den Ansprüchen 1 bis 12 durchzuführen.

20. Netzwerkvorrichtung, die dazu konfiguriert ist, eines der Verfahren nach den Ansprüchen 13 bis 18 durchzuführen.

21. Computerlesbares Speichermedium, auf dem Anweisungen gespeichert sind, wobei, wenn das Computerprogramm oder die Anweisungen durch eine Kommunikationsvorrichtung ausgeführt werden, die Kommunikationsvorrichtung dazu veranlasst wird, eines der Verfahren nach den Ansprüchen 1 bis 12 durchzuführen.

22. Computerlesbares Speichermedium, auf dem Anweisungen gespeichert sind, wobei, wenn das Computerprogramm oder die Anweisungen durch eine Netzwerkvorrichtung ausgeführt werden, die Netzwerkvorrichtung dazu veranlasst wird, eines der Verfahren nach den Ansprüchen 13 bis 18 durchzuführen.

## Revendications

1. Procédé réalisé par un dispositif de communication, le procédé comprenant les étapes de :
• réception (étape 902), via un premier réseau visité du dispositif de communication, d'un message en provenance d'un premier réseau domestique du dispositif de communication, le message comprenant un premier conteneur d'informations de réseau et un indicateur de justificatif d'identité,
∘ dans lequel le premier conteneur d'informations de réseau comprend des informations qui sont protégées en termes d'intégrité et/ou protégées par chiffrement,
∘ dans lequel l'indicateur de justificatif d'identité indique un type de justificatif d'identité utilisé pour protéger le premier conteneur d'informations de réseau, le type de justificatif d'identité étant soit un justificatif d'identité 3GPP, soit un justificatif d'identité non 3GPP, dans lequel l'indicateur de justificatif d'identité est un bit d'indicateur, dans lequel une première valeur du bit d'indicateur indique que le justificatif d'identité est un justificatif d'identité 3GPP et une seconde valeur du bit d'indicateur indique que le justificatif d'identité est un justificatif d'identité non 3GPP ;
• vérification (étape 904), du premier conteneur d'informations de réseau à l'aide d'un ou de plusieurs paramètres de sécurité sur la base du type de justificatif d'identité ; et
• obtention (étape 906), lorsque le premier conteneur d'informations de réseau est vérifié avec succès, des informations comprises dans le premier conteneur d'informations de réseau.

2. Procédé selon la revendication 1, dans lequel le message comprend également des informations indiquant un type de mécanisme de protection appliqué pour protéger le premier conteneur d'informations de réseau.

3. Procédé selon la revendication 2, dans lequel le type de mécanisme de protection comprend une protection d'intégrité uniquement, une protection de chiffrement uniquement ou une protection d'intégrité et de chiffrement.

4. Procédé selon l'une quelconque des revendications 1 à 3, dans lequel la vérification du premier conteneur d'informations de réseau comprend :
la vérification de l'intégrité du premier conteneur d'informations de réseau à l'aide des un ou plusieurs paramètres de sécurité ; et/ou
le déchiffrement du premier conteneur d'informations de réseau à l'aide des un ou plusieurs paramètres de sécurité.

5. Procédé selon l'une quelconque des revendications 1 à 4, dans lequel les un ou plusieurs paramètres de sécurité comprennent un ou plusieurs des éléments suivants :
∘ un paramètre de sécurité pour vérifier le premier conteneur d'informations de réseau, ou accéder à un réseau, le paramètre de sécurité comportant un certificat, une clé publique ou une clé de confidentialité ;
∘ un identifiant de clé ;
∘ une quantité de synchronisation ou de fraîcheur ;
∘ un nonce, ou
∘ une préférence de sécurité réseau.

6. Procédé selon l'une quelconque des revendications 1 à 5, comprenant également :
l'exécution d'une instruction comprise dans le premier conteneur d'informations de réseau lorsque le premier conteneur d'informations de réseau est vérifié avec succès.

7. Procédé selon la revendication 6, dans lequel l'instruction :
ordonne au dispositif de communication de se connecter à un second réseau visité ; ou
ordonne au dispositif de communication d'effectuer une sélection de réseau pour sélectionner un nouveau réseau visité sur la base d'une liste de réseaux candidats fournie par le premier réseau domestique.

8. Procédé selon la revendication 7, comprenant également :
l'accès au second réseau visité ou au nouveau réseau visité à l'aide du type de justificatif d'identité indiqué par l'indicateur de justificatif d'identité et/ou des informations dans le premier conteneur d'informations de réseau.

9. Procédé selon la revendication 7, dans lequel le second réseau visité est un réseau préféré configuré par le premier réseau domestique pour le dispositif de communication.

10. Procédé selon l'une quelconque des revendications 1 à 9, comprenant également :
l'envoi d'un second conteneur d'informations de réseau au premier réseau domestique via le premier réseau visité, le second conteneur d'informations de réseau comprenant des informations protégées en intégrité et/ou protégées par chiffrement.

11. Procédé selon l'une quelconque des revendications 1 à 5, comprenant également :
la suppression du premier conteneur d'informations réseau lorsque la vérification du premier conteneur d'informations réseau échoue.

12. Procédé selon l'une quelconque des revendications 1 à 11, dans lequel le premier conteneur d'informations de réseau comprend au moins l'un des éléments suivants :
une instruction de pilotage de réseau ;
une politique de pilotage de réseau ;
une liste de réseaux préférés visités pour le dispositif de communication ;
une exigence de qualité de service, QoS, pour un service ou un réseau visité ;
des informations de configuration et/ou de capacité pour le dispositif de communication ; ou
un paramètre de sécurité.

13. Procédé réalisé par un dispositif réseau d'un premier réseau, le procédé comprenant les étapes de :
• détermination (étape 1002) d'envoyer des premières informations à un dispositif de communication, le premier réseau étant un réseau domestique du dispositif de communication, et le dispositif de communication étant desservi par un premier réseau visité ;
• génération (étape 1004) d'un conteneur d'informations de réseau comprenant les premières informations, le conteneur d'informations de réseau étant protégé en intégrité et/ou protégé par chiffrement ;
• détermination (étape 1006) d'un type de justificatif d'identité utilisé pour protéger le conteneur d'informations de réseau, le type de justificatif d'identité étant soit un justificatif d'identité 3GPP, soit un justificatif d'identité non 3GPP ; et
• envoi (étape 1008) d'un message au dispositif de communication via le premier réseau visité, le message comprenant le conteneur d'informations de réseau et un indicateur de justificatif d'identité indiquant le type de justificatif d'identité, dans lequel l'indicateur de justificatif d'identité est un bit d'indicateur, dans lequel une première valeur du bit d'indicateur indique que le justificatif d'identité est un justificatif d'identité 3GPP et une seconde valeur du bit d'indicateur indique que le justificatif d'identité est un justificatif d'identité non 3GPP, afin que le dispositif de communication vérifie le premier conteneur d'informations de réseau à l'aide d'un ou de plusieurs paramètres de sécurité sur la base du type de justificatif d'identité.

14. Procédé selon la revendication 13, dans lequel le conteneur d'informations de réseau comprend au moins l'un des éléments suivants :
une instruction de pilotage de réseau ;
une politique de pilotage de réseau ;
une liste de réseaux préférés visités pour le dispositif de communication ;
une exigence de qualité de service, QoS, pour un service ou un réseau visité ;
des informations de configuration et/ou de capacité pour le dispositif de communication ; ou
un paramètre de sécurité.

15. Procédé selon la revendication 14, dans lequel l'instruction de pilotage de réseau :
ordonne au dispositif de communication de se connecter à un second réseau visité ; ou
ordonne au dispositif de communication d'effectuer une sélection de réseau pour sélectionner un nouveau réseau visité sur la base d'une liste de réseaux candidats fournie par le réseau domestique.

16. Procédé selon l'une quelconque des revendications 13 à 15, dans lequel le message comprend également un ou plusieurs paramètres de sécurité utilisés pour vérifier le conteneur d'informations de réseau.

17. Procédé selon la revendication 16, dans lequel les un ou plusieurs paramètres de sécurité comprennent un ou plusieurs des éléments suivants :
∘ un paramètre de sécurité pour vérifier le conteneur d'informations de réseau, ou accéder à un réseau, le paramètre de sécurité comportant un certificat, une clé publique ou une clé de confidentialité ;
∘ un identifiant de clé ;
∘ une quantité de synchronisation ou de fraîcheur ;
∘ un nonce, ou
∘ une préférence de sécurité réseau.

18. Procédé selon l'une quelconque des revendications 13 à 17, dans lequel le conteneur d'informations de réseau comprend des informations pour accéder à un réseau public et des informations pour accéder à un réseau privé.

19. Dispositif de communication configuré pour réaliser l'un quelconque des procédés selon les revendications 1 à 12.

20. Dispositif réseau configuré pour réaliser l'un quelconque des procédés selon les revendications 13 à 18.

21. Support de stockage lisible par ordinateur stockant un programme informatique ou des instructions, dans lequel, lorsque le programme informatique ou les instructions sont exécutés par un dispositif de communication, le dispositif de communication est amené à réaliser l'un quelconque des procédés selon les revendications 1 à 12.

22. Support de stockage lisible par ordinateur stockant un programme informatique ou des instructions, dans lequel, lorsque le programme informatique ou les instructions sont exécutés par un dispositif réseau, le dispositif réseau est amené à réaliser l'un quelconque des procédés selon les revendications 13 à 18.
